(19) **Europäisches Patentamt** / **European Patent Office** / **Office européen des brevets**

(11) **EP 4 671 731 A1**

(12) # EUROPEAN PATENT APPLICATION

(43) Date of publication:
31.12.2025  Bulletin 2026/01

(21) Application number: 25184945.1

(22) Date of filing: 24.06.2025

(51) International Patent Classification (IPC):
**G01N 15/10** (2024.01)      **G01N 15/14** (2024.01)
**G01N 15/1429** (2024.01)

(52) Cooperative Patent Classification (CPC):
**G01N 15/1012; G01N 15/1425; G01N 15/1429;**
**G01N 15/1459;** G01N 2015/1006

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 25.06.2024  US 202463663613 P

(71) Applicant: **Becton Dickinson and Company**
**Franklin Lakes, NJ 07417-1880 (US)**

(72) Inventors:
• **Welsh, Joshua A.**
  **Franklin Lakes State/Province, 07417-1880 (US)**
• **Mage, Peter L.**
  **Franklin Lakes State, 07417-1880 (US)**
• **Bai, Wenyu**
  **Franklin Lakes, 07417-1880 (US)**

(74) Representative: **Arnold & Siedsma**
**Bezuidenhoutseweg 57**
**2594 AC The Hague (NL)**

(54) **METHODS AND SYSTEMS FOR GAIN-INDEPENDENT DATA NORMALIZATION IN FLOW CYTOMETRY DATA AND SYSTEMS FOR SAME**

(57)   Aspects of the present disclosure include methods for normalization of gainindependent analyte data (e.g., flow cytometer data). Methods according to certain embodiments include detecting light from a particle in a sample in a flow stream with a light detection system having a photodetector, generating data signals in response to the detected light, normalizing the data signal with a detector gain to generate gain-normalized data signals and adjusting the gain-normalized data signals with a scaling factor to generate scaled data signals. Systems and non-transitory computer-readable storage media configured to carry out the subject methods are also provided.

FIG. 3

**(Cont. next page)**

# FIG. 3 (Cont.)

**300b**

fluorescent channels

**324** BP/783/56 **317** **317a**

**323** BP/700/54 **316**

**322** BP/586/42 **315**

**316a**

BP/534/46 **314**

**315a**

BP/488/15 **312** SSC image

**314a**

light loss image

**312a**

PD P L **313**

**313a**

FSC image

**311a**

**350** digitizer

**351** real-time digital processing

**352** sort triggering

**Description**

**CROSS-REFERENCE TO RELATED APPLICATION**

This application claims priority to United States Provisional Patent Application Serial No. 63/663,613 filed June 24, 2024.

**INTRODUCTION**

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left uncharged.

Flow cytometers have scaled measured photodetector data in arbitrary units. The location of a given input optical signal on this arbitrary unit scale could be increased/decreased by changing the detector gain settings. The ability of flow cytometers to perform consistently day-to-day (defined as producing the same output signal for the same input sample) depends on a number of factors, such as temperature and optomechanical alignment, which can vary randomly over time. To preserve performance, manufacturers to date have established detector gain settings based on daily quality control (QC) procedures. However, users must choose between optimizing their detector settings to maximize signal-to-noise (SNR) performance, or adjusting their detector settings to ensure consistent sample MFIs over time - but they cannot achieve both at the same time.

**SUMMARY**

Aspects of the present disclosure include methods for normalization of gain-independent analyte data (e.g., data from a flow cytometer). Methods according to certain embodiments include detecting light from a particle in a sample in a flow stream with a light detection system having a photodetector, generating data signals in response to the detected light, normalizing the data signal with a detector gain to generate gain-normalized data signals and adjusting the gain-normalized data signals with a scaling factor to generate scaled data signals. Systems and non-transitory computer-readable storage media configured to carry out the subject methods are also provided.

In some embodiments, methods include real-time gain-independent scaling of data signals from a particle analyzer, such as flow cytometry data. In some embodiments, the scaling factor adjusts the gain-normalized data signals to a predetermined mean fluorescence intensity. In some instances, methods include calculating the scaling factor. In some instances, calculating the scaling factor includes determining linear gain as a function of photodetector voltage, determining the gain corresponding to the predetermined mean fluorescence intensity and calculating the scaling factor which adjusts the generated gain-normalized data signals to the predetermined mean fluorescence intensity.

In some embodiments, the linear gain is derived from a look-up table. In some instances, methods include determining the linear gain as a function of photodetector voltage by irradiating the photodetector with a light source at a plurality of different intensities, detecting light from the light source at the plurality of different intensities at a plurality of different photodetector voltages and determining detector gain settings for the photodetector sufficient to generate a mean fluorescence intensity that increases linearly with the detector gain. In some instances, the light source is a light emitting diode. In some instances, the light source is a laser, such as a continuous wave laser. In some instances, the predetermined mean fluorescence intensity is determined by irradiating a reference particle with a light source and detecting fluorescence from the reference particle. In certain instances, the reference particle is a multi-spectral fluorescence bead. In some embodiments, the detector gain used to normalize the data signals is the gain of the photodetector at the predetermined mean fluorescence intensity.

In some embodiments, methods include adjusting the gain-normalized data signals with a calibration factor. In some instances, the calibration factor adjusts the gain-normalized data signals in response to changes in particle velocity in the flow stream. In some instances, the calibration factor adjusts the gain-normalized data signals in response to changes in laser intensity of the light source. In some instances, methods include spectrally unmixing the gain-normalized data signals and adjusting the spectrally unmixed data signals with the scaling factor to generate scaled unmixed data signals.

In some embodiments, light is detected in a plurality of photodetector channels. In some instances, methods include irradiating the sample with a light source. In some instances, the light source includes a laser, such as a plurality of lasers.

Aspects of the present disclosure also include systems for practicing the subject methods, e.g., to analyze analyte data by generating gain-normalized data signals. Systems according to certain embodiments include a light source configured to irradiate a sample having a particle in a flow stream, a light detection system having a photodetector for detecting light from the irradiated particle and a processor comprising memory operably coupled to the processor where the memory includes instructions stored thereon, which when executed by the processor, cause the processor to generate data signals in response to the detected light, normalize the data signal with a detector gain to generate gain-normalized data signals and adjust the gain-normalized data signals with a scaling factor to generate scaled data signals. In some instances, the system is configured to detect light by the light detection system in a plurality of photodetector channels. In some instances, the scaling factor adjusts the gain-normalized data signals to a predetermined mean fluorescence intensity.

In some embodiments, the memory includes instructions for calculating the scaling factor. In some instances, the memory includes instructions for calculating the scaling factor by determining linear gain as a function of photodetector voltage, determining the gain corresponding to the predetermined mean fluorescence intensity and calculating the scaling factor which adjusts the generated gain-normalized data signals to the predetermined mean fluorescence intensity. In some instances, the linear gain is derived from a look-up table. In some embodiments, the memory includes instructions for determining the linear gain as a function of photodetector voltage by irradiating the photodetector with a light source at a plurality of different intensities, detecting light from the light source at the plurality of different intensities at a plurality of different photodetector voltages and determining detector gain settings for the photodetector sufficient to generate a mean fluorescence intensity that increases linearly with the detector gain. In some instances, the light source includes a light emitting diode.

In some instances, the memory includes instructions for determining the predetermined mean fluorescence intensity by irradiating a reference particle with a light source and detecting fluorescence from the reference particle. In some instances, the reference particle is a multi-spectral bead. In some instances, the memory includes instructions to use the detector gain to normalize the data signals. In some instances, the detector gain used to normalize the data signals is the gain of the photodetector at the predetermined mean fluorescence intensity. In some instances, the memory includes instructions for adjusting the gain-normalized data signals with a calibration factor. In some instances, the memory includes instructions to adjust the gain-normalized data signals with a calibration factor which adjusts the gain-normalized data signals in response to changes in particle velocity in the flow stream. In some instances, the memory includes instructions to adjust the gain-normalized data signals with a calibration factor which adjusts the gain-normalized data signals in response to changes in laser intensity of the light source. In some instances, the memory includes instructions for spectrally unmixing the gain-normalized data signals and adjusting the spectrally unmixed data signals with the scaling factor to generate scaled unmixed data signals.

In some embodiments, systems include a light source having one or more lasers, such as a plurality of lasers. In some instances, the light detection system includes a plurality of photodetectors. In some instances, the photodetectors include one or more photomultiplier tubes. In some instances, the light detection system includes a photodetector array. In certain instances, one or more of the photodetectors in the array is a photodiode. In certain instances, one or more of the photodetectors in the array are charged coupled devices.

Aspects of the present disclosure also include non-transitory computer readable storage medium, such as to practice one or more computer implemented methods described herein. In some embodiments, the non-transitory computer readable storage medium includes algorithm for detecting light from a particle in a sample in a flow stream with a light detection system having a photodetector, algorithm for generating data signals in response to the detected light, algorithm for normalizing the data signal with a detector gain to generate gain-normalized data signals and algorithm for adjusting the gain-normalized data signals with a scaling factor to generate scaled data signals.

In some instances, the non-transitory computer readable storage medium includes algorithm to apply a scaling factor which adjusts the gain-normalized data signals to a predetermined mean fluorescence intensity. In some instances, the non-transitory computer readable storage medium includes algorithm for calculating the scaling factor. In some instances, the non-transitory computer readable storage medium includes algorithm for determining linear gain as a function of photodetector voltage, algorithm for determining the gain corresponding to the predetermined mean fluorescence intensity and algorithm for calculating the scaling factor which adjusts the generated gain-normalized data signals to the predetermined mean fluorescence intensity.

In some instances, the non-transitory computer readable storage medium includes algorithm to derive the linear gain from a look-up table. In some instances, the non-transitory computer readable storage medium includes algorithm for irradiating the photodetector with a light source at a plurality of different intensities, algorithm for detecting light from the light source at the plurality of different intensities at a plurality of different photodetector voltages and algorithm for determining detector gain settings for the photodetector sufficient to generate a mean fluorescence intensity that increases linearly with the detector gain. In some instances, the non-transitory computer readable storage medium includes algorithm for determining the predetermined mean fluorescence intensity. In some instances, the transitory computer readable storage medium includes algorithm for irradiating a reference particle (e.g., a multi-spectral bead) with a light source and algorithm for detecting fluorescence from the reference particle. In some instances, the non-transitory computer readable storage medium includes algorithm to use detector gain to normalize the data signals that is the gain of the photodetector at the predetermined mean fluorescence intensity. In some instances, the non-transitory computer readable storage medium includes algorithm for adjusting the gain-normalized data signals with a calibration factor. In some instances, the non-transitory computer readable storage medium includes algorithm for adjusting the gain-normalized data signals with a calibration factor which adjusts the gain-normalized data signals in response to changes in particle velocity in the flow stream.

In some instances, the non-transitory computer readable storage medium includes algorithm for adjusting the gain-normalized data signals with a calibration factor which adjusts the gain-normalized data signals in response to changes in laser intensity of the light source. In some embodiments, the non-transitory computer readable storage medium includes algorithm for spectrally unmixing the gain-normalized data signals and algorithm for adjusting the spectrally unmixed data signals with the scaling factor to generate scaled unmixed data signals.

## BRIEF DESCRIPTION OF THE FIGURES

The disclosure may be best understood from the following detailed description when read in conjunction with the accompanying drawings. Included in the drawings are the following figures:

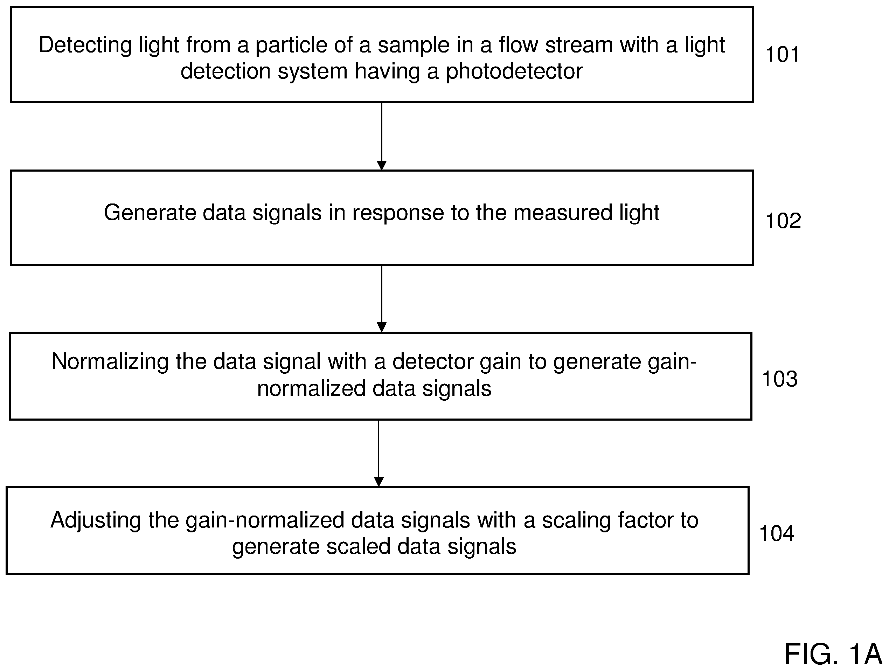

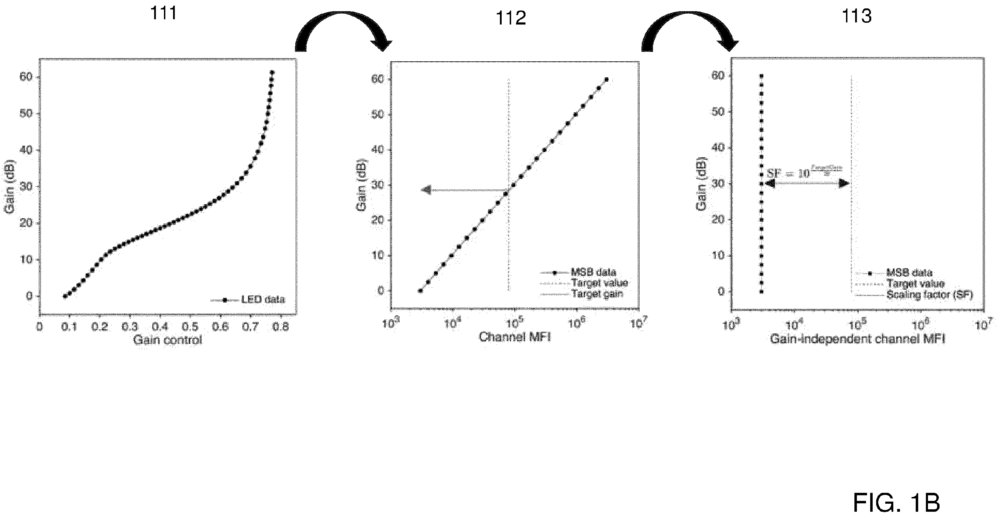

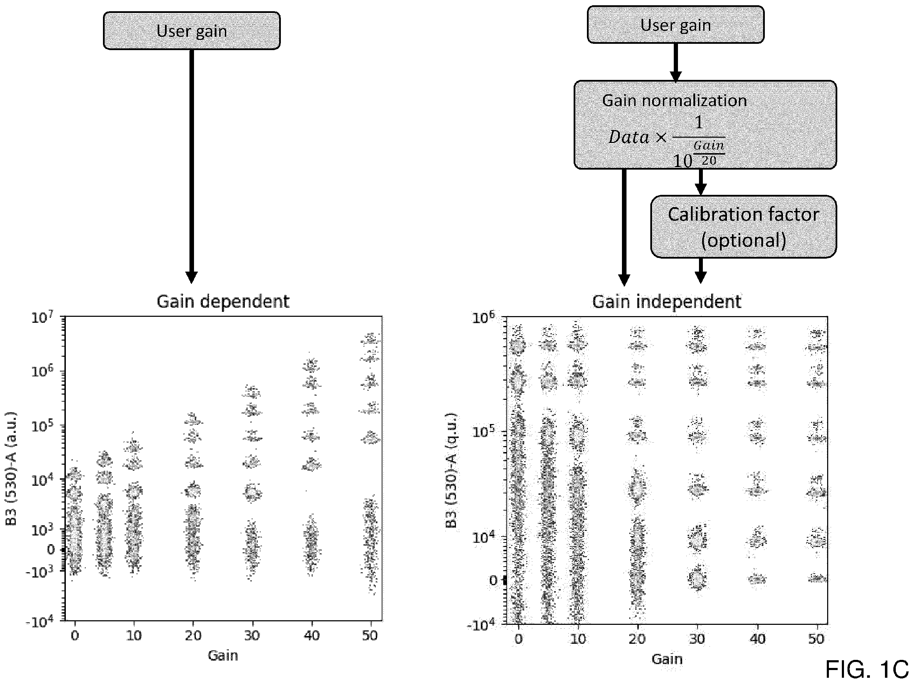

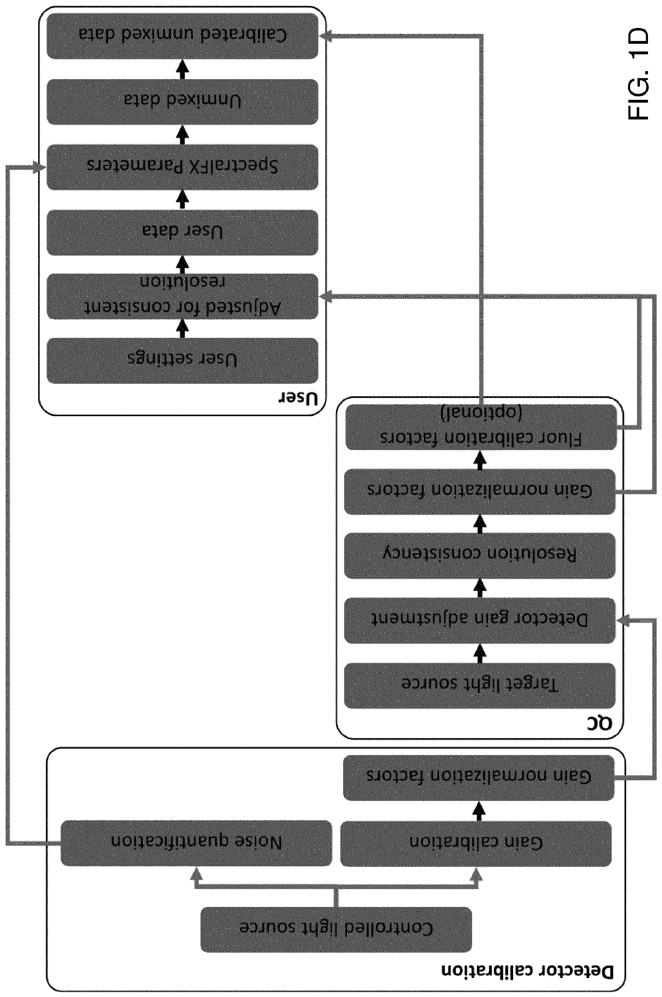

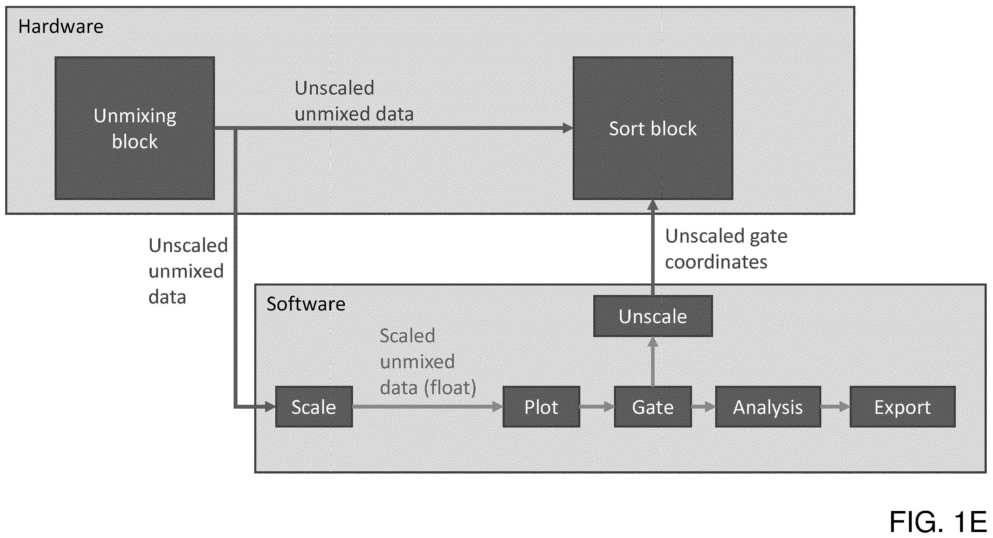

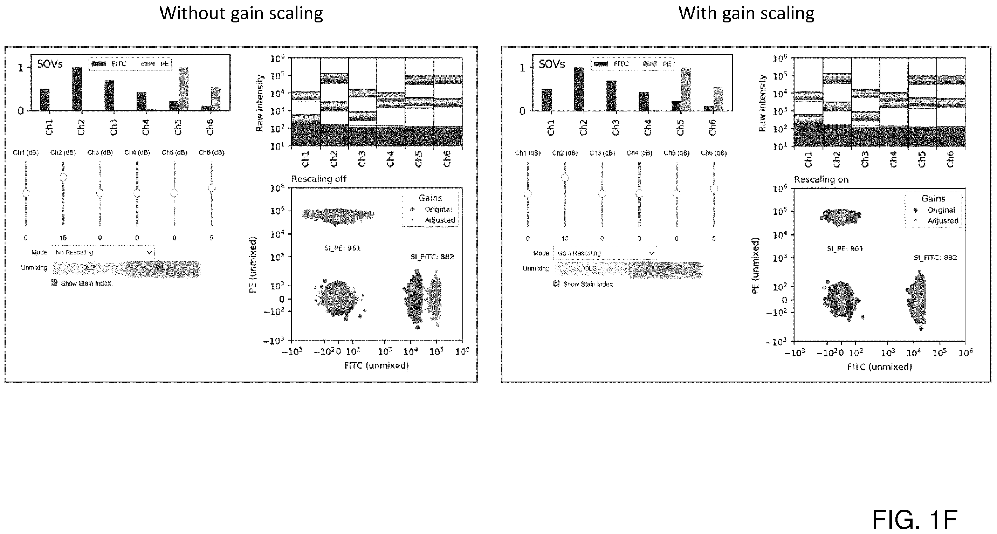

FIG. 1A depicts a flow chart for normalization of gain-independent analyte data signals according to certain embodiments. FIG. 1B depicts a step-by-step illustration of generating scaled gain-normalized data according to certain embodiments. FIG. 1C depicts a comparison of the scatter plot analysis of sample data generated using gain-dependent data signals and gain-independent (gain normalized) data signals according to certain embodiments. FIG. 1D depicts a diagram of scaling data signals from a flow cytometer according to certain embodiments. FIG. 1E depicts the use of scaled and unscaled data signals according to certain embodiments. FIG. 1F depicts a comparison between data analysis with gain scaling and data analysis without gain scaling according to certain embodiments.

FIG. 2 presents a flow cytometric system according to certain embodiments.

FIG. 3 depicts an image-enabled particle sorter according to certain embodiments.

FIG. 4 depicts a functional block diagram of a particle analysis system according to certain embodiments.

FIG. 5 depicts a depicts a functional block diagram for one example of a control system according to certain embodiments.

FIG. 6A-6B depict schematic drawings of a particle sorter system according to certain embodiments.

FIG. 7 depicts aspects of a computer-controlled system according to certain embodiments.

FIG. 8: Example of APD detector gain calibration. When instrument baseline is performed, each detector undergoes calibration using the mcLED, to determine the relationship between gain control and the observed detector gain.

FIG. 9: Examples of individual components of TTV rescaling which include default, gain-independent, and ABD scaling Panel A. default flow cytometry data scaling vs gain (dB), Panel B. gain-independent flow cytometry scaling vs.gain (dB), Panel C. ABD flow cytometry data scaling vs. gain (dB).

FIG. 10: An example displaying the necessity for dynamic scaling with the introduction of ABD scaling. Panel A. default flow cytometry data scaling vs. gain (dB), Panel B. ABD flow cytometry scaling vs. gain (dB). The black populations represent dim/negative beads, the red population represents bright/positive beads.

**FIG. 11:** An example of transforming a raw data biexponential transforms variables to create consistent data between scaling modes. The left column shows the default scaling mode, the right column shows the DSI scaling mode, where the biexponential transform is adjusted to account for the DSI factor. Data shows 8-peak rainbow beads acquired each different detector gain settings with each row having a different gain setting annotated in the axis title. The axis title also states the T and r values used to generate the biexponential transforms with values rounded to 1 decimal place.

## DETAILED DESCRIPTION

Aspects of the present disclosure include methods for normalization of gain-independent analyte data (e.g., flow cytometer data). Methods according to certain embodiments include detecting light from a particle in a sample in a flow stream with a light detection system having a photodetector, generating data signals in response to the detected light, normalizing the data signal with a detector gain to generate gain-normalized data signals and adjusting the gain-normalized data signals with a scaling factor to generate scaled data signals. Systems and non-transitory computer-readable storage media configured to carry out the subject methods are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely", "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims are not to be construed as necessarily limited in any way by the construction of "means" or "steps" limitations, but are to be accorded the full scope of the meaning and equivalents of the definition provided by the claims under the judicial doctrine of equivalents.

## METHODS OF NORMALIZATION OF GAIN-INDEPENDENT ANALYTE DATA

Aspects of the present disclosure include methods for normalization of gain-independent analyte data (e.g., data from a flow cytometer). In some embodiments, the subject methods provide for real-time gain-independent scaling of data signals from a particle analyzer. In some instances, the subject methods provide for sample mean fluorescence intensities (MFIs) being maintained irrespective of data settings, such that the numerical scale used to represent MFI would correspond to the true intensity of an input signal. In certain embodiments, the subject methods provide for correcting for instrument-to-instrument variation by taking into account instrument-to-instrument tolerances such as particle velocity and laser intensity. In some instances, this provides for facile and efficient cross-instrument analyses with the same instrument acquisition and data analysis templates with faster and higher precision downstream intra-platform and longitudinal analyses. In addition, when data signals are processed and scaled in accordance with methods according to certain embodiments, detector gain adjustments (such as those performed during quality control assessments) maintain resolution performance of the cytometer, for example by adjusting gain settings to maximize signal-to-noise ratio (SNR). In some instances, methods provide for calibration-free consistency within a single instrument over time, such as for 1 day or more, such as for 3 days or more, such as for 7 days or more, such as for 2 weeks or more, such as for 4 weeks or more, such as for 3 months or more, such as for 6 months or more, such as for 9 months or more and including for maintaining calibration-free consistency within an instrument for 1 year or more.

In certain embodiments, the subject methods provide for an optimized photodetector system performance, such as increased signal-to-noise ratio of the light detection system. For example, the signal-to-noise ratio of the light detection system may be increased by 5% or more, such as by 10% or more, such as by 25% or more, such as by 50% or more, such as by 75% or more, such as by 90% or more and including by 99% or more. In certain instances, the subject methods increase the signal-to-noise ratio by 2-fold or more, such as by 3-fold or more, such as by 4-fold or more, such as by 5-fold or more and including by 10-fold or more. In some embodiments, the subject methods increase consistency of mean fluorescence intensity output from the photodetectors of the light detection system by 5% or more, such as by 10% or more, such as by 25% or more, such as by 50% or more, such as by 75% or more, such as by 90% or more and including by 99% or more. In certain instances, the subject methods increase consistency of mean fluorescence intensity output from the photodetectors of the light detection system by 2-fold or more, such as by 3-fold or more, such as by 4-fold or more, such as by 5-fold or more and including by 10-fold or more.

The term "analyte data" is used herein in its conventional sense to refer to data obtained by assessing a particular analyte for certain characteristics. In some cases, the analyte data is flow cytometer data. By "flow cytometer data" is meant information regarding the characteristics of sample particles that has been collected by any number of detectors in a particle analyzer. As discussed herein, a "particle analyzer" is an analytical tool (e.g., flow cytometer) that enables the characterization of particles on the basis of certain (e.g., optical) parameters. By "particle", it is meant a discrete component of a biological sample such as a molecule, analyte-bound bead, individual cell, or the like. While the present disclosure is primarily described in terms of flow cytometer data, the applicability of the disclosure is not limited to flow cytometer data. In certain cases, the present disclosure may be applicable to other types of data, such as nucleic acid data.

Flow cytometer data may be received from any suitable source. In some embodiments, flow cytometer data is received from the memory of a storage device. In such embodiments, flow cytometer data may have been previously generated and saved in the memory of the storage device for subsequent recall and analysis. In other embodiments, the flow cytometer data is received in real time. Put another way, flow cytometer data generated during the operation of a flow cytometer may subsequently (e.g., immediately) populate the data-space (e.g., two-dimensional plot). In embodiments, the flow cytometer data is received from a forward scatter detector. A forward scatter detector may, in some instances, yield information regarding the overall size of a particle. In embodiments, the flow cytometer data is received from a side scatter detector. A side scatter detector may, in some instances, be configured to detect refracted and reflected light from the surfaces and internal structures of the particle, which tends to increase with increasing particle complexity of structure.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used. In embodiments, the flow cytometer data is received from a fluorescent light detector. A fluorescent light detector may, in some instances, be configured to detect fluorescence emissions from fluorescent molecules, e.g., labeled specific binding members (such as labeled antibodies that specifically bind to markers of interest) associated with the particle in the flow cell. In certain embodiments, methods include detecting fluorescence from the sample with one or more fluorescence detectors, such as 2 or more, such as 3 or more, such as 4 or more, such as 5 or more, such as 6 or more, such as 7 or more, such as 8 or more, such as 9 or more, such as 10 or more, such as 15 or more and including 25 or more fluorescence detectors. In embodiments, each of the fluorescence detectors is configured to generate a fluorescence data signal. Fluorescence from the sample may be detected by each fluorescence detector, independently, over one or more of the wavelength ranges of 200 nm - 1200 nm. In some instances, methods include detecting fluorescence from the sample over a range of wavelengths, such as from 200 nm to 1200 nm, such as from 300 nm to 1100 nm, such as from 400 nm to 1000 nm, such as from 500 nm to 900 nm and including from 600 nm to 800 nm. In other instances, methods include detecting fluorescence with each fluorescence detector at one or more specific wavelengths. For example, the fluorescence may be detected at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof, depending on the number of different fluorescence detectors in the subject light detection system. In certain embodiments, methods include detecting wavelengths of light which correspond to the fluorescence peak wavelength of certain fluorophores present in the sample. In embodiments, flow cytometer data is received from one or more light detectors (e.g., one or more detection channels), such as 2 or more, such as 3 or more, such as 4 or more, such as 5 or more, such as 6 or more and including 8 or more light detectors (e.g., 8 or more detection channels).

In practicing the subject methods, a sample having particles (e.g., beads of a calibration composition as described in greater detail below) in a flow stream is irradiated with light from a light source. In some embodiments, the light source is a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where methods include irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, super-luminescent emitting diode, semiconductor light emitting diode, wide spectrum LED white light source, an multi-LED integrated white light source, among other broadband light sources or any combination thereof.

In other embodiments, methods includes irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In certain embodiments, methods include irradiating the flow stream with one or more lasers. The type and number of lasers will vary depending on the sample as well as desired light collected and may be a pulsed laser or continuous wave laser. For example, the laser may be a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, $Nd:YVO_4$ laser, $Nd:YCa_4O(BO_3)_3$ laser, Nd:YCOB laser, titanium sapphire laser, thulim YAG laser, ytterbium YAG laser, $ytterbium_2O_3$ laser or cerium doped lasers and combinations thereof; a semiconductor diode laser, optically pumped semiconductor laser (OPSL), or a frequency doubled- or frequency tripled implementation of any of the above mentioned lasers.

The sample in the flow stream may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, in some embodiments, the methods include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. In other instances, where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. In other embodiments, the narrow band light source includes one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. In other embodiments, the flow stream is sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where sample is sequentially irradiated with two or more light sources, the duration sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each light source is 10 microseconds. In embodiments where sample is sequentially irradiated by more than two (i.e., 3 or more) light sources, the delay between irradiation by each light source may be the same or different.

The sample may be irradiated continuously or in discrete intervals. In some instances, methods include irradiating the sample in the sample with the light source continuously. In other instances, the sample in is irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In practicing the subject methods, light from the irradiated sample is measured, such as by collecting light from the sample over a range of wavelengths (e.g., 200 nm - 1000 nm). In embodiments, methods may include one or more of measuring light absorption by the sample (e.g., brightfield light data), measuring light scatter (e.g., forward or side scatter light data) and measuring light emission by the sample (e.g., fluorescence light data).

As described above, a light beam generator component may be employed having a laser and an acousto-optic device for frequency shifting the laser light. In these embodiments, methods include irradiating the acousto-optic device with the laser. Depending on the desired wavelengths of light produced in the output laser beam (e.g., for use in irradiating a sample in a flow stream), the laser may have a specific wavelength that varies from 200 nm to 1500 nm, such as from 250 nm to 1250 nm, such as from 300 nm to 1000 nm, such as from 350 nm to 900 nm and including from 400 nm to 800 nm. The acousto-optic device may be irradiated with one or more lasers, such as 2 or more lasers, such as 3 or more lasers, such as 4 or more lasers, such as 5 or more lasers and including 10 or more lasers. The lasers may include any combination of types of lasers. For example, in some embodiments, the methods include irradiating the acousto-optic device with an array of lasers, such as an array having one or more gas lasers, one or more dye lasers and one or more solid-state lasers.

Where more than one laser is employed, the acousto-optic device may be irradiated with the lasers simultaneously or sequentially, or a combination thereof. For example, the acousto-optic device may be simultaneously irradiated with each of the lasers. In other embodiments, the acousto-optic device is sequentially irradiated with each of the lasers. Where more than one laser is employed to irradiate the acousto-optic device sequentially, the time each laser irradiates the acousto-optic device may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the acousto-optic device with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. In embodiments where the acousto-optic device is sequentially irradiated with two or more lasers, the duration the acousto-optic device is irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In certain embodiments, the time period between irradiation by each laser is 10 microseconds. In embodiments where the acousto-optic device is sequentially irradiated by more than two (i.e., 3 or more) lasers, the delay between irradiation by each laser may be the same or different.

The acousto-optic device may be irradiated continuously or in discrete intervals. In some instances, the methods include irradiating the acousto-optic device with the laser continuously. In other instances, the acousto-optic device is irradiated with the laser in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the laser, the acousto-optic device may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In embodiments, the methods include applying radiofrequency drive signals to the acousto-optic device to generate angularly deflected laser beams. Two or more radiofrequency drive signals may be applied to the acousto-optic device to generate an output laser beam with the desired number of angularly deflected laser beams, such as 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including 100 or more radiofrequency drive signals.

The angularly deflected laser beams produced by the radiofrequency drive signals each have an intensity based on the amplitude of the applied radiofrequency drive signal. In some embodiments, methods include applying radiofrequency drive signals having amplitudes sufficient to produce angularly deflected laser beams with a desired intensity. In some instances, each applied radiofrequency drive signal independently has an amplitude from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In some embodiments, the sample in the flow stream is irradiated with an output laser beam from an acousto-optic device that includes angularly deflected laser beams each having an intensity based on the amplitude of the applied radiofrequency drive signal. For example, the output laser beam used to irradiate the particle in the flow stream may include 2 or more angularly deflected laser beams, such as 3 or more, such as 4 or more, such as 5 or more, such as 6 or more, such as 7 or more, such as 8 or more, such as 9 or more, such as 10 or more and including 25 or more angularly deflected laser beams. In embodiments, each of the angularly deflected laser beams have different frequencies which are shifted from frequency of the input laser beam by a predetermined radiofrequency.

Each angularly deflected laser beam is also spatially shifted from each other. Depending on the applied radiofrequency drive signals and desired irradiation profile of the output laser beam, the angularly deflected laser beams may be separated by 0.001 $\mu$m or more, such as by 0.005 $\mu$m or more, such as by 0.01 $\mu$m or more, such as by 0.05 $\mu$m or more, such as by 0.1 $\mu$m or more, such as by 0.5 $\mu$m or more, such as by 1 $\mu$m or more, such as by 5 $\mu$m or more, such as by 10 $\mu$m or more, such as by 100 $\mu$m or more, such as by 500 $\mu$m or more, such as by 1000 $\mu$m or more and including by 5000 $\mu$m or more. In some embodiments, the angularly deflected laser beams overlap, such as with an adjacent angularly deflected laser beam along a horizontal axis of the output laser beam. The overlap between adjacent angularly deflected laser beams (such as overlap of beam spots) may be an overlap of 0.001 $\mu$m or more, such as an overlap of 0.005 $\mu$m or more, such as an overlap of 0.01 $\mu$m or more, such as an overlap of 0.05 $\mu$m or more, such as an overlap of 0.1 $\mu$m or more, such as an overlap of 0.5 $\mu$m or more, such as an overlap of 1 $\mu$m or more, such as an overlap of 5 $\mu$m or more, such as an overlap of 10 $\mu$m or more and including an overlap of 100 $\mu$m or more.

In certain instances, the sample is irradiated in the flow stream with a plurality of beams of frequency-shifted light and images of the cell nuclei in the flow stream are generated such as described in Diebold, et al. Nature Photonics Vol. 7(10); 806-810 (2013), as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894.

As discussed above, in embodiments light from the irradiated sample is conveyed to a light detection system as described in greater detail below and measured by the plurality of photodetectors. In some embodiments, methods include measuring the collected light over a range of wavelengths (e.g., 200 nm - 1000 nm). For example, methods may include collecting spectra of light over one or more of the wavelength ranges of 200 nm - 1000 nm. In yet other embodiments, methods include measuring collected light at one or more specific wavelengths. For example, the collected light may be measured at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, methods including measuring wavelengths of light which correspond to the fluorescence peak wavelength of fluorophores. In some embodiments, methods include measuring collected light across the entire fluorescence spectrum of each fluorophore in the sample.

The collected light may be measured continuously or in discrete intervals. In some instances, methods include taking measurements of the light continuously. In other instances, the light is measured in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

Measurements of the collected light may be taken one or more times during the subject methods, such as 2 or more times, such as 3 or more times, such as 5 or more times and including 10 or more times. In certain embodiments, light from the sample is measured 2 or more times, with the data in certain instances being averaged.

Light from the sample may be measured at one or more wavelengths of, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring the collected light at 400 or more different wavelengths.

In some embodiments, methods include further adjusting the light from the sample before detecting the light. For example, the light from the sample source may be passed through one or more lenses, mirrors, pinholes, slits, gratings, light refractors, and any combination thereof. In some instances, the collected light is passed through one or more focusing lenses, such as to reduce the profile of the light. In other instances, the emitted light from the sample is passed through one or more collimators to reduce light beam divergence.

In embodiments, light is detected in one or more photodetector channels. In some instances, light from the sample is detected in a plurality of photodetector channels, such as 2 or more photodetector channels, such as 4 or more photodetector channels, such as 8 or more photodetector channels, such as 16 or more photodetector channels, such as 32 or more photodetector channels, such as 64 or more photodetector channels, such as 128 or more photodetector channels and including 256 or more photodetector channels.

In practicing the subject methods according to certain embodiments data signals generated in response to light detected by the light detection system are normalized with a detector gain. The data signals are normalized in some instances by dividing the data signals with the gain to generate gain-independent normalized data signals. In some instances, the gain used to generate the gain-independent normalized data signals is determined by determining a target gain which provides for a predetermined mean fluorescence intensity. In some embodiments, baseline data signals are used to generate a lookup table for gain control to ensure that changes in mean fluorescence intensity is linear with changes to detector settings (e.g., gain settings). In some instances, methods applying settings to each photodetector channel such that mean fluorescence intensity is linear with changes to detector gain. In some instances, methods include performing measurements of a reference optical source (e.g., an LED or other light source as described above) at different gain or voltage settings to derive a lookup table for linear increases in particle mean fluorescence intensity with respect to detector gain or voltage settings. In some instances, methods include determining photodetector gain settings as a function of photodetector channel mean fluorescence intensity. In some instances, methods include determining detector gain settings for the photodetector sufficient to generate a mean fluorescence intensity that increases linearly with the detector gain.

In some instances, methods include determining a target predetermined mean fluorescence intensity (MFI). In some instances, methods include determining a gain setting in one or more photodetector channel that achieves the target predetermined mean fluorescence intensity. In some instances, methods include determining mean fluorescence intensity at a plurality of different gain settings. In some embodiments, methods include changing the gain setting of each photodetector, such as by 0.01 dB or more, such as by 0.05 dB or more, such as by 0.1 dB or more, such as by 0.5 dB or more, such as by 1 dB or more, such as by 2 dB or more, such as by 3 dB or more, such as by 5 dB or more and including by 10 dB or more. In one example, methods include incrementally increasing the gain setting of each photodetector and determining detector gain settings for the photodetector sufficient to generate a mean fluorescence intensity at each operating voltage, such as incrementally increasing the operating voltage by 0.01 dB or more, such as by 0.05 dB or more, such as by 0.1 dB or more, such as by 0.5 dB or more, such as by 1 dB or more, such as by 2 dB or more, such as by 3 dB or more, such as by 5 dB or more and including by 10 dB or more.

In some instances, methods include collecting data signals for 2 or more different gain settings, such as 3 or more different gain settings, such as 5 or more different gain settings, such as 10 or more different gain settings, such as 25 or more different gain settings and including collecting data signals at 50 or more different gain settings.

In some instances, the predetermined mean fluorescence intensity is determined by irradiating a reference particle with a light source and detecting fluorescence from the reference particle. In some instances, the reference particle is a multi-spectral fluorescence bead. In certain instances, the multi-spectral fluorescence bead includes a fluorescent dye component that is covalently bonded to a particle. In some embodiments, particles are beads, such as structures having a diameter in the nanometer to micrometer range, such as from 0.01 to 1,000 $\mu$m in diameter, for example from 0.1 to 100 $\mu$m in diameter, and including from 1 to 100 $\mu$m in diameter, and, for use in flow cytometry, including from about 1 to 10 $\mu$m in diameter. Such particles can be of any shape, and in some instances are approximately spherical. Such particles can be made of any appropriate material (or combinations thereof), including, but not limited to polymers such as polystyrene; polystyrene which contains other copolymers such as divinylbenzene; polymethylmethacrylate (PMMA); polyvinyltoluene (PVT); copolymers such as styrene/butadiene, styrene/vinyltoluene; latex; glasses; or other materials, such as silica (e.g., SiO2). Of interest in some embodiments are particles, e.g., beads, such as glass beads, having low or no auto-fluorescence.

In some embodiments, the beads are a metal organic polymer matrix, for example an organic polymer matrix that has a backbone structure that contains a metal such as aluminum, barium, antimony, calcium, chromium, copper, erbium, germanium, iron, lead, lithium, phosphorus, potassium, silicon, tantalum, tin, titanium, vanadium, zinc or zirconium. In some embodiments, the porous metal organic matrix is an organosiloxane polymer including but not limited to polymers of methyltrimethoxysilane, dimethyldimethoxysilane, tetraethoxysilane, methacryloxypropyltrimethoxysilane, bis(triethoxysilyl)ethane, bis(triethoxysilyl)butane, bis(triethoxysilyl)pentane, bis(triethoxysilyl)hexane, bis(triethoxysilyl)heptane, bis(triethoxysilyl)octane, and combinations thereof.

Particles of interest may be porous or non-porous. In some embodiments, the particles are non-porous. In other embodiments, the particles are porous, such as where the particles have pores with diameters that range from 0.01 nm to 1000 nm, such as from 0.05 nm to 750 nm, such as from 0.1 nm to 500 nm, such as from 0.5 nm to 250 nm, such as from 1 nm to 100 nm, such as from 5 nm to 75 nm and including particles having pores having diameters that range from 10 nm to 50 nm.

In certain embodiments, the fluorescently labeled beads of interest include, but are not limited to, fluorescently labelled polystyrene beads, fluorescein beads, rhodamine beads, and other beads tagged with a fluorescent dye. Additional examples of fluorescently labeled beads are described in U.S. Pat. Nos. 6,350,619; 7,738,094; and 8,248,597.

In some embodiments, the scaling factor adjusts the gain-normalized data signals to the predetermined mean fluorescence intensity. In some instances, the scaling factor is the on-target gain that adjusts the gain-normalized data signals to a target mean fluorescence intensity (e.g., as determined using a multi-spectral reference particle). In some instances, the scaling factor provides for scaling of the mean fluorescence intensity to be consistent irrespective of detector setting, such as where the change in mean fluorescence intensity at different detector settings is 10% or less, such as by 9% or less, such as 8% or less, such as 7% or less, such as 6% or less, such as 5% or less, such as 4% or less, such as 3% or less, such as 2% or less, such as 1% or less, such as 0.5% or less, such as 0.1% or less and including where the change in mean fluorescence intensity at different detector settings is 0.01% or less. In some instances, the scaling factor provides for scaling of the mean fluorescence intensity independent of detector settings. In certain embodiments, the scaling factor is multiplied by the gain-normalized data signals to generate scaled data signals.

In some embodiments, methods include calculating the scaling factor. In some instances, calculating the scaling factor includes determining linear gain as a function of photodetector voltage, determining the gain corresponding to the predetermined mean fluorescence intensity and calculating the scaling factor which adjusts the generated gain-normalized data signals to the predetermined mean fluorescence intensity. In certain embodiments, the scaling factor is calculated in real-time. In certain instances, the scaling factor is applied to the gain-independent data signals in real-time. In certain instances, the scaling factor is re-calculated after each sample run. In some instances, the scaling factor is saved in software or in hardware (such as in an integrated circuit, e.g., a field programmable gate array) In certain instances, the scaling factor is adjusted to account for particle analyzer tolerances. In some instances, the scaling factor is adjusted using calibration factors, such as calibration factors which adjust for system changes, system noise, light source noise, photodetector noise and particle velocity variations.

In some embodiments, methods include adjusting the gain-normalized data signals with a calibration factor. In some instances, the calibration factor adjusts the gain-normalized data signals in response to changes in particle velocity in the flow stream. In some instances, the calibration factor adjusts the gain-normalized data signals in response to changes in laser intensity of the light source.

In some embodiments, methods include spectrally unmixing the gain-normalized data signals and adjusting the spectrally unmixed data signals with the scaling factor to generate scaled unmixed data signals. In these embodiments, methods may include spectrally resolving the light from each fluorophore in the sample (e.g., using a weighted least squares algorithm or a generalized least squares algorithm). In some embodiments, the overlap between each different fluorophore is determined and the contribution of each fluorophore to the overlapping fluorescence is calculated. In some embodiments, spectrally resolving light includes calculating a spectral unmixing matrix for the fluorescence spectra for each of the plurality of fluorophores having overlapping fluorescence in the sample detected by the light detection system. For example, spectrally resolving light according to the methods described herein may include a Moore-Penrose inverse or pseudoinverse of the spectral matrix. In some instances, the algorithm for spectral unmixing is characterized by a Cholesky decomposition of the unmixing matrix. In some embodiments, unmixed spectral data signals are scaled with detector gain using a spillover matrix. In some instances, methods include scaling unmixed data with gain according to:

1) Calculating a first spillover matrix $M^0$ from spectra acquired at reference gain level $G^0$; where $M$ is an m-by-n matrix, with each column normalized to its maximum value
2) Generate a new spillover matrix $M$ at active gain G:

$$M(G) = \begin{bmatrix} G_1/G_1^0 & & \\ & \ddots & \\ & & G_m/G_m^0 \end{bmatrix} \times \begin{bmatrix} M_{1,1}^0 & \cdots & M_{1,n}^0 \\ M_{2,1}^0 & \cdots & M_{2,n}^0 \\ \vdots & \ddots & \vdots \\ M_{m,1}^0 & \cdots & M_{m,n}^0 \end{bmatrix} \times \begin{bmatrix} S_1 & & \\ & \ddots & \\ & & S_n \end{bmatrix}$$

where:

the left-multiplied diagonal matrix scales each row of $M$ by the gain ratio corresponding to that detector;
the right-multiplied diagonal matrix scales each column of $M$ by its maximum value, ensuring that each column has values spanning [0,1];

$$S_j = \frac{1}{\max((GM^0)_j)}$$

normalizes each column by gain-scaled column max
$M(G)$ is used for unmixing at gain setting G

3) Scale unmixed data with S so that unmixed mean fluorescence intensities (MFIs) are maintained across gain settings
where:

$$f_{\text{scaled}} = S \times f_{\text{unscaled}}$$

$f_{\text{unscaled}}$ is the unmixed output from hardward for use in sorting
$f_{scaled}$ is the unmixed output for use in software.

In some instances, spectrally resolving the light from each fluorophore (e.g., calculating a spectral unmixing matrix for each fluorophore) may be used to estimate the abundance of each fluorophore in the sample. In certain embodiments, the abundance of each fluorophore associated with a target particle may be determined. The abundance of each fluorophore associated with a target particle may be used in identifying and classifying a particle. In some instances, identified or classified particles may be used to sort target particles (e.g., cells) in the sample. In certain embodiments, spectrally resolving fluorophores in the sample, such as by calculating spectral unmixing, is conducted so that sorting is sufficiently fast to sort particles in real time after detection by the light detection system.

In certain embodiments, gain-normalized data signals are spectrally unmixed by unmixing algorithms such as those described in United States Patent No. 11,009,400, United States Patent Application No. 18/537,103 filed on December 12, 2023 and United States Provisional Patent Application No. 63/622,370 filed on January 18, 2024.

Figure 1A depicts a flow chart for normalization of gain-independent analyte data signals according to certain embodiments. At step 101, light from a particle of a sample in a flow stream is detected with a light detection system having a photodetector. In some instances, the light detection system includes a plurality of photodetectors. Data signals are generated in response to the detected light at step 102. Light from the particle in the flow stream can be detected in a plurality of different photodetector channels. The data signals at 103 are normalized with a detector gain to generate gain-normalized data signals. The gain-normalized data signals are in some embodiments, gain independent such that mean fluorescence intensity is the same irrespective of photodetector setting. At step 104, the gain-normalized data signals are adjusted with a scaling factor to generate scaled data signals. In some instances, the scaling factor adjusts the gain-normalized data signals to a target mean fluorescence intensity. In some instances, the target mean fluorescence intensity is one that was predetermined using a reference particle such as a multi-spectral bead.

Figure 1B depicts a step-by-step illustration of generating scaled gain-normalized data according to certain embodiments. In step 111, the baseline derives a lookup table for gain control to ensure linear mean fluorescence intensity with changes to detector settings. Periodic quality control (e.g., daily) shown at step 112 increases the detector gain settings to make a reference particle (e.g., multi-spectral bead) mean fluorescence intensity equal to the on-target gain. The on-target gain and on-target MFI are used to calculate an offset that is used to adjust user gains. At step 113, gain-normalized data is generated by dividing data signals by the linear gain, resulting in gain-normalized data (shown at step 113 where multi-spectral bead data exhibits the same MFI regardless of detector setting). The on-target gain, derived at step 112 can be utilized as the scaling factor instead of as an offset. This scaling factor allows the scaling of MFI to be consistent irrespective of detector setting rather than calculating an offset that is applied for saved settings and updated only after quality control. This can be done independently of detector settings. The periodic gain setting (e.g., daily gain setting) in certain embodiments can be optimized to ensure consistency in sensitivity, resolution or dynamic range. In some instances, the gain setting is left unchanged. Figure 1C depicts a comparison of the scatter plot analysis of sample data generated using gain-dependent data signals and gain-independent (gain normalized) data signals according to certain embodiments.

Figure 1D depicts a diagram of scaling data signals from a flow cytometer according to certain embodiments. Scaling of data signals from a light detection system can include three different components: 1) detector calibration; 2) Periodic (e.g., day-to-day) quality control; and 3) data acquisition from a sample by a user. The detector calibration component includes determining detector gain for normalizing data signals as well as calculating scaling factor as described above. In some instances, the detector calibration includes determining a target mean fluorescence intensity using a reference particle (such as a multi-spectral bead) and a controlled light source such as a light emitting diode (LED). In some instances, the target mean fluorescence intensity is determined in order to calculate a scaling factor used to adjust the gain-normalized data signals. The quality control component includes adjustments to the system for optimizing resolution and reducing noise in the generated data signals. In some instances, the quality control component is conducted one or more times per day, such as 2 times per day. In some instances, the quality control component is conducted one or more times per week, such as 2 times per week. In embodiments, the quality control component includes detector gain adjustments, ensuring and maintaining resolution consistency (e.g., where resolution of the data signals changes by 15% or less, such as by 14% or less, such as by 13% or less, such as by 12% or less, such as by 11% or less, such as by 10% or less, such as by 9% or less, such as by 8% or less, such as by 7% or less, such as by 6% or less, such as by 5% or less, such as by 4% or less, such as by 3% or less, such as by 2% or less, such as by 1% or less, such as by 0.5% or less, such as by 0.1% or less and including by 0.01% or less). The gain normalization factors may also be generated during the quality control component as well as fluorophore calibration factors. When data for a sample is generated, user settings may be adjusted for consistent resolution and data signals can be adjusted using spectral effects parameters as well as unmixing the data signals (e.g., with a weighted least squares or generalized least squares algorithm). The unmixed data can also be adjusted with calibration factors such as those which adjusts the gain-normalized data signals in response to changes in particle velocity in the flow stream or adjusts the gain-normalized data signals in response to changes in laser intensity of the light source.

Figure 1E depicts the use of scaled and unscaled data signals according to certain embodiments. As shown in Figure 1E, unscaled data signals that are spectrally unmixed are used in hardware such as an integrated circuit device (e.g., an FPGA). In certain instances, the integrated circuit device includes a sorting block which applies the unscaled unmixed data signals to generate a particle sorting decision with a particle sorter as described in greater detail below. The unscaled unmixed data can also be scaled in software (e.g., with a processor having memory with instructions stored thereon as described below). The scaled unmixed data can also be plotted (e.g., on a scatter plot) and gated. The determined gates can be unscaled and provided to the sorting block as described above or the identified gates can be used in analysis and exported, such as to a display. Figure 1F depicts a comparison between data analysis with gain scaling and data analysis without gain scaling according to certain embodiments.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T-cell populations, tumor cells or hematopoietic progenitor cells (CD34+) from whole blood, bone marrow or cord blood.

In practicing the subject methods according to certain embodiments, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

In some embodiments, methods include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods include irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

## SYSTEMS

Aspects of the present disclosure also include systems for practicing the subject methods, e.g., to analyze analyte data by generating gain-normalized data signals. Systems according to certain embodiments include a light source configured to irradiate a sample having a particle in a flow stream, a light detection system having a photodetector for detecting light from the irradiated particle and a processor comprising memory operably coupled to the processor where the memory includes instructions stored thereon, which when executed by the processor, cause the processor to generate data signals in response to the detected light, normalize the data signal with a detector gain to generate gain-normalized data signals and adjust the gain-normalized data signals with a scaling factor to generate scaled data signals.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

The subject programmable logic may be implemented in any of a variety of devices such as specifically programmed event processing computers, wireless communication devices, integrated circuit devices, or the like. In some embodiments, the programable logic may be executed by a specifically programmed processor, which may include one or more processors, such as one or more digital signal processors (DSPs), configurable microprocessors, application specific integrated circuits (ASICs), field programmable gate arrays (FPGAs), or other equivalent integrated or discrete logic circuitry. A combination of computing devices, e.g., a combination of a DSP and a microprocessor, a plurality of microprocessors, one or more microprocessors in conjunction with a DSP core, or any other such configuration in at least partial data connectivity may implement one or more of the features described herein.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth® communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth® communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth® RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows® NT®, Windows® XP, Windows® 7, Windows® 8, Windows® 10, iOS®, macOS®, Linux®, Ubuntu®, Fedora®, OS/400®, i5/OS®, IBM i®, Android™, SGI IRIX®, Oracle Solaris® and others.

In some embodiments, systems further comprise a flow cytometer operably connected to the processor. The subject flow cytometers generally include a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 $\mu$m represents the optical axis of light emitted by the light source, the interrogation point may range from -50 $\mu$m to 50 $\mu$m, such as -25 $\mu$m to 40 $\mu$m, and including -15 $\mu$m to 30 $\mu$m. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be 1 $\mu$L/min or more, such as 2 $\mu$L/min or more, such as 3 $\mu$L/min or more, such as 5 $\mu$L/min or more, such as 10 $\mu$L/min or more, such as 15 $\mu$L/min or more, such as 25 $\mu$L/min or more, such as 50 $\mu$L/min or more and including 100 $\mu$L/min or more, where in some instances the rate of sample conveyed to the flow cell chamber by the sample injection port is 1 $\mu$L/sec or more, such as 2 $\mu$L/sec or more, such as 3 $\mu$L/sec or more, such as 5 $\mu$L/sec or more, such as 10 $\mu$L/sec or more, such as 15 $\mu$L/sec or more, such as 25 $\mu$L/sec or more, such as 50 $\mu$L/sec or more and including 100 $\mu$L/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 $\mu$L/sec or more, such as 50 $\mu$L/sec or more, such as 75 $\mu$L/sec or more, such as 100 $\mu$L/sec or more, such as 250 $\mu$L/sec or more, such as 500 $\mu$L/sec or more, such as 750 $\mu$L/sec or more, such as 1000 $\mu$L/sec or more and including 2500 $\mu$L/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Systems of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, $CO_2$ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO$_4$ laser, Nd:YCa$_4$O(BO$_3$)$_3$ laser, Nd:YCOB laser, titanium sapphire laser, thulim YAG laser, ytterbium YAG laser, ytterbium$_2$O$_3$ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

In some embodiments, systems include a light source that is a non-laser light source, such as a lamp, including but not limited to a halogen lamp, deuterium arc lamp, xenon arc lamp, a light-emitting diode, such as a broadband LED with continuous spectrum, superluminescent emitting diode, semiconductor light emitting diode, wide spectrum LED white light source, an multi-LED integrated. In some instances, the non-laser light source is a stabilized fiber-coupled broadband light source, white light source, among other light sources or any combination thereof.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example lasers in light beam generators of interest may be a gas laser, such as a helium-neon laser, argon laser, krypton laser, xenon laser, nitrogen laser, CO2 laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, $Nd:YVO_4$ laser, $Nd:YCa_4O(BO_3)_3$ laser, Nd:YCOB laser, titanium sapphire laser, thulim YAG laser, ytterbium YAG laser, ytterbium$_2$O$_3$ laser or cerium doped lasers and combinations thereof.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 $\mu$m or more, such as by 0.005 $\mu$m or more, such as by 0.01 $\mu$m or more, such as by 0.05 $\mu$m or more, such as by 0.1 $\mu$m or more, such as by 0.5 $\mu$m or more, such as by 1 $\mu$m or more, such as by 5 $\mu$m or more, such as by 10 $\mu$m or more, such as by 100 $\mu$m or more, such as by 500 $\mu$m or more, such as by 1000 $\mu$m or more and including by 5000 $\mu$m or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 $\mu$m or more, such as an overlap of 0.005 $\mu$m or more, such as an overlap of 0.01 $\mu$m or more, such as an overlap of 0.05 $\mu$m or more, such as an overlap of 0.1 $\mu$m or more, such as an overlap of 0.5 $\mu$m or more, such as an overlap of 1 $\mu$m or more, such as an overlap of 5 $\mu$m or more, such as an overlap of 10 $\mu$m or more and including an overlap of 100 $\mu$m or more.

In certain instances, light beam generators configured to generate two or more beams of frequency shifted light include laser excitation modules as described in U.S. Patent Nos. 9,423,353; 9,784,661 and 10,006,852 and U.S. Patent Publication Nos. 2017/0133857 and 2017/0350803.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm$^2$ to 10 cm$^2$, such as from 0.05 cm$^2$ to 9 cm$^2$, such as from 0.1 cm$^2$ to 8 cm$^2$, such as from 0.5 cm$^2$ to 7 cm$^2$ and including from 1 cm$^2$ to 5 cm$^2$.

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm$^2$ to 10 cm$^2$, such as from 0.05 cm$^2$ to 9 cm$^2$, such as from, such as from 0.1 cm$^2$ to 8 cm$^2$, such as from 0.5 cm$^2$ to 7 cm$^2$ and including from 1 cm$^2$ to 5 cm$^2$.

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

In some instances, the system is configured to detect light by the light detection system in a plurality of photodetector channels, such as 2 or more photodetector channels, such as 4 or more photodetector channels, such as 8 or more photodetector channels, such as 16 or more photodetector channels, such as 32 or more photodetector channels, such as 64 or more photodetector channels, such as 128 or more photodetector channels, such as 256 or more photodetector channels and including 512 or more photodetector channels.

In some embodiments, the memory includes instructions for normalizing data signals generated in response to light detected by the light detection system with a detector gain. In some instances, the memory includes instructions to normalize the data signals by dividing the data signals with the gain to generate gain-independent normalized data signals. In some instances, the memory includes instructions to determine the gain used to generate the gain-independent normalized data signals. In some instances, the memory include instructions to determine this gain by determining a target gain which provides for a predetermined mean fluorescence intensity. In some embodiments, the memory includes instructions to use baseline data signals to generate a lookup table for gain control to ensure that changes in mean fluorescence intensity is linear with changes to detector settings (e.g., gain settings). In some instances, the memory includes instructions for applying settings to each photodetector channel such that mean fluorescence intensity is linear with changes to detector gain. In some instances, the memory includes instructions for performing measurements of a reference optical source (e.g., an LED or other light source as described above) at different gain or voltage settings to derive a lookup table for linear increases in particle mean fluorescence intensity with respect to detector gain or voltage settings. In some instances, the memory includes instructions for determining photodetector gain settings as a function of photodetector channel mean fluorescence intensity. In some instances, the memory includes instructions for determining detector gain settings for the photodetector sufficient to generate a mean fluorescence intensity that increases linearly with the detector gain.

In some instances, the memory includes instructions for determining a target predetermined mean fluorescence intensity (MFI). In some instances, the memory includes instructions for determining a gain setting in one or more photodetector channel that achieves the target predetermined mean fluorescence intensity. In some instances, the memory includes instructions for determining mean fluorescence intensity at a plurality of different gain settings. In some embodiments, the memory includes instructions for changing the gain setting of each photodetector, such as by 0.01 dB or more, such as by 0.05 dB or more, such as by 0.1 dB or more, such as by 0.5 dB or more, such as by 1 dB or more, such as by 2 dB or more, such as by 3 dB or more, such as by 5 dB or more and including by 10 dB or more. In one example, the memory includes instructions for incrementally increasing the gain setting of each photodetector and determining detector gain settings for the photodetector sufficient to generate a mean fluorescence intensity at each operating voltage, such as incrementally increasing the operating voltage by 0.01 dB or more, such as by 0.05 dB or more, such as by 0.1 dB or more, such as by 0.5 dB or more, such as by 1 dB or more, such as by 2 dB or more, such as by 3 dB or more, such as by 5 dB or more and including by 10 dB or more.

In some instances, the memory includes instructions for collecting data signals for 2 or more different gain settings, such as 3 or more different gain settings, such as 5 or more different gain settings, such as 10 or more different gain settings, such as 25 or more different gain settings and including collecting data signals at 50 or more different gain settings.

In some instances, the scaling factor is the on-target gain that adjusts the gain-normalized data signals to a target mean fluorescence intensity (e.g., as determined using a multi-spectral reference particle). In some instances, the scaling factor provides for scaling of the mean fluorescence intensity to be consistent irrespective of detector setting, such as where the change in mean fluorescence intensity at different detector settings is 10% or less, such as by 9% or less, such as 8% or less, such as 7% or less, such as 6% or less, such as 5% or less, such as 4% or less, such as 3% or less, such as 2% or less, such as 1% or less, such as 0.5% or less, such as 0.1% or less and including where the change in mean fluorescence intensity at different detector settings is 0.01% or less. In some instances, the scaling factor provides for scaling of the mean fluorescence intensity independent of detector settings. In certain embodiments, the memory includes instructions for multiplying the scaling factor by the gain-normalized data signals to generate scaled data signals.

In some embodiments, the memory includes instructions for calculating a scaling factor the adjusts the gain-normalized data signals to the predetermined mean fluorescence intensity. In some instances, the memory includes instructions for calculating the scaling factor by determining linear gain as a function of photodetector voltage, determining the gain corresponding to the predetermined mean fluorescence intensity and calculating the scaling factor which adjusts the generated gain-normalized data signals to the predetermined mean fluorescence intensity. In certain embodiments, the memory includes instructions to calculate the scaling factor in real-time. In certain instances, the memory includes instructions to apply the scaling factor to the gain-independent data signals in real-time. In certain instances, the memory includes instructions to re-calculate the scaling factor after each sample run. In some instances, the memory includes instructions to save the scaling factor in software or in hardware (such as in an integrated circuit, e.g., a field programmable gate array) In certain instances, the memory includes instructions to adjust the scaling factor to account for particle analyzer tolerances. In some instances, the memory includes instructions to adjust the scaling factor using calibration factors, such as calibration factors which adjust for system changes, system noise, light source noise, photodetector noise and particle velocity variations.

In some embodiments, the memory includes instructions to adjust the gain-normalized data signals with a calibration factor. In some instances, the calibration factor adjusts the gain-normalized data signals in response to changes in particle velocity in the flow stream. In some instances, the calibration factor adjusts the gain-normalized data signals in response to changes in laser intensity of the light source.

In some embodiments, the memory includes instructions to spectrally unmix the gain-normalized data signals and adjust the spectrally unmixed data signals with the scaling factor to generate scaled unmixed data signals. In these embodiments, the memory includes instructions to spectrally resolve the light from each fluorophore in the sample (e.g., using a weighted least squares algorithm or a generalized least squares algorithm). In some embodiments, the overlap between each different fluorophore is determined and the contribution of each fluorophore to the overlapping fluorescence is calculated. In some embodiments, the memory includes instructions for spectrally resolving light by calculating a spectral unmixing matrix for the fluorescence spectra for each of the plurality of fluorophores having overlapping fluorescence in the sample detected by the light detection system. For example, the memory includes instructions for spectrally resolving light according to the methods described herein using a Moore-Penrose inverse or pseudoinverse of the spectral matrix. In some instances, the algorithm for spectral unmixing is characterized by a Cholesky decomposition of the unmixing matrix. In some embodiments, unmixed spectral data signals are scaled with detector gain using a spillover matrix. In some instances, the memory includes instructions for scaling unmixed data with gain according to:

4) Calculating a first spillover matrix $M^0$ from spectra acquired at reference gain level $G^0$; where $M$ is an m-by-n matrix, with each column normalized to its maximum value

5) Generate a new spillover matrix $M$ at active gain $G$:

$$M(G) = \begin{bmatrix} G_1/G_1^0 & & \\ & \ddots & \\ & & G_m/G_m^0 \end{bmatrix} \times \begin{bmatrix} M_{1,1}^0 & \cdots & M_{1,n}^0 \\ M_{2,1}^0 & \cdots & M_{2,n}^0 \\ \vdots & \ddots & \vdots \\ M_{m,1}^0 & \cdots & M_{m,n}^0 \end{bmatrix} \times \begin{bmatrix} S_1 & & \\ & \ddots & \\ & & S_n \end{bmatrix}$$

where:

the left-multiplied diagonal matrix scales each row of $M$ by the gain ratio corresponding to that detector;

the right-multiplied diagonal matrix scales each column of $M$ by its maximum value, ensuring that each column has values spanning [0,1];

$$S_j = \frac{1}{\max((GM^0)_j)}$$

normalizes each column by gain-scaled column max

$M(G)$ is used for unmixing at gain setting $G$

6) Scale unmixed data with $S$ so that unmixed mean fluorescence intensities (MFIs) are maintained across gain settings

where:

$$f_{scaled} = S \times f_{unscaled}$$

$f_{unscaled}$ is the unmixed output from hardware for use in sorting

$f_{scaled}$ is the unmixed output for use in software.

In some instances, the memory includes instructions for spectrally resolving the light from each fluorophore (e.g., calculating a spectral unmixing matrix for each fluorophore) for use in estimating the abundance of each fluorophore in the sample. In certain embodiments, the memory includes instructions to determine the abundance of each fluorophore associated with a target particle. The abundance of each fluorophore associated with a target particle may be used in identifying and classifying a particle. In some instances, identified or classified particles may be used to sort target particles (e.g., cells) in the sample. In certain embodiments, spectrally resolving fluorophores in the sample, such as by calculating spectral unmixing, is conducted so that sorting is sufficiently fast to sort particles in real time after detection by the light detection system.

In certain embodiments, the memory includes instructions having spectral unmixing algorithms such as those described in United States Patent No. 11,009,400, United States Patent Application No. 18/537,103 filed on December 12, 2023 and United States Provisional Patent Application No. 63/622,370 filed on January 18, 2024.

In some embodiments, systems include or are operationally coupled to a flow cytometer. Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto™ flow cytometer, BD Biosciences FACSCanto™ II flow cytometer, BD Accuri™ flow cytometer, BD Accuri™ C6 Plus flow cytometer, BD Biosciences FACSCelesta™ flow cytometer, BD Biosciences FACSLyric™ flow cytometer, BD Biosciences FACSVerse™ flow cytometer, BD Biosciences FACSymphony™ flow cytometer, BD Biosciences LSRFortessa™ flow cytometer, BD Biosciences LSRFortessa™ X-20 flow cytometer, BD Biosciences FACSPresto™ flow cytometer, BD Biosciences FACSVia™ flow cytometer and BD Biosciences FACSCalibur™ cell sorter, a BD Biosciences FACSCount™ cell sorter, BD Biosciences FACSLyric™ cell sorter, BD Biosciences Via™ cell sorter, BD Biosciences Influx™ cell sorter, BD Biosciences Jazz™ cell sorter, BD Biosciences Aria™ cell sorter, BD Biosciences FACSAria™ II cell sorter, BD Biosciences FACSAria™ III cell sorter, BD Biosciences FACSAria™ Fusion cell sorter and BD Biosciences FACSMelody™ cell sorter, BD Biosciences FACSymphony™ S6 cell sorter, BD Biosciences FACSDiscover™ cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661 and 10,006,852 and U.S. Patent Publication Nos. 2017/0133857 and 2017/0350803. In some embodiments where the flow cytometer is a particle sorter, the particle sorter is an image enabled particle sorter. Image enabled particle sorters are described in U.S. Provisional Patent Application Nos. 63/431,803 and 63/465,057.

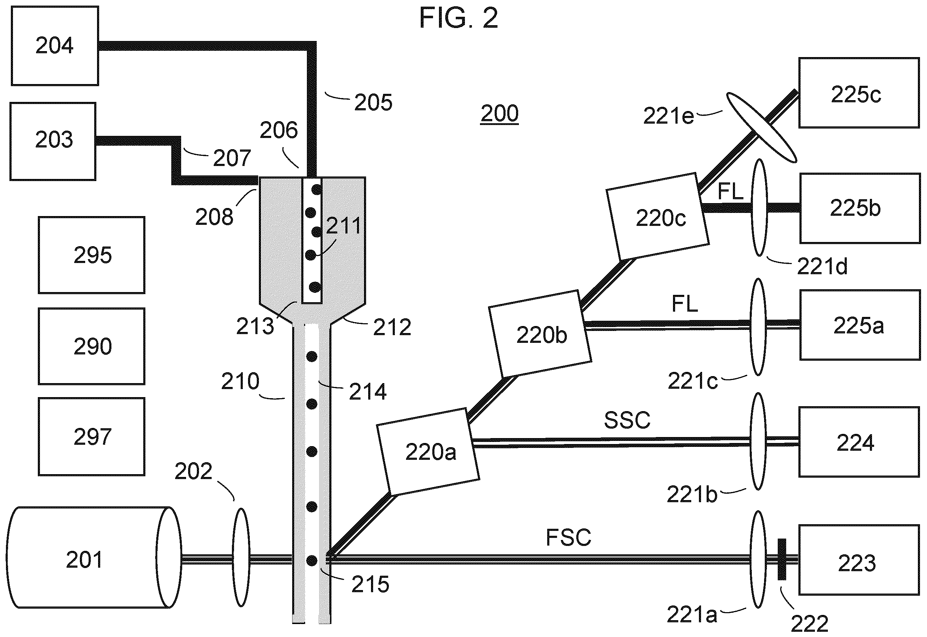

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017. In certain embodiments, particles (e.g., cells) of the sample are sorted using a sort decision module having a plurality of sort decision units, such as those described in U.S. Patent Publication No. 2020/0256781, filed on December 23, 2019, systems for sorting components of a sample include a particle sorting module having deflection plates, such as described in U.S. Patent Publication No. 2017/0299493, filed on March 28, 2017.

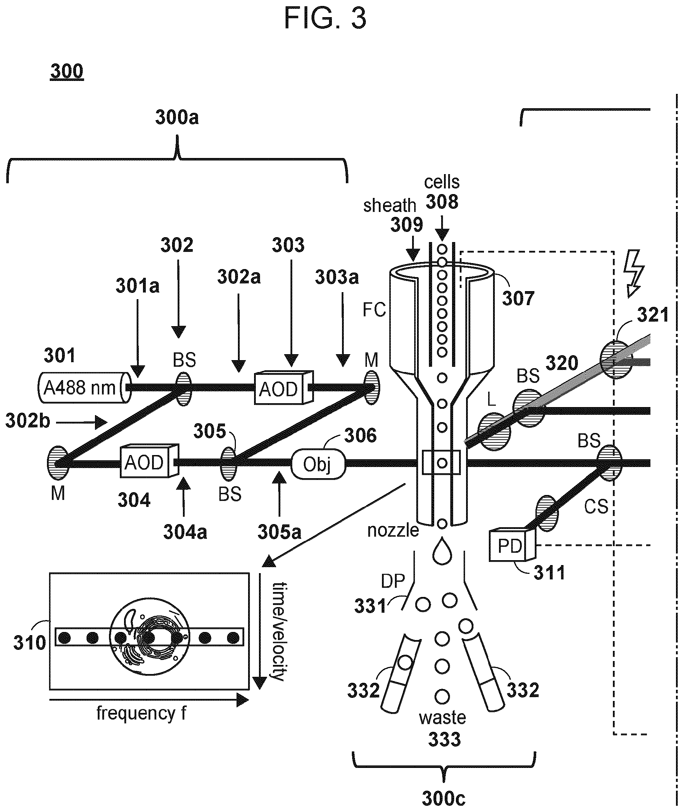

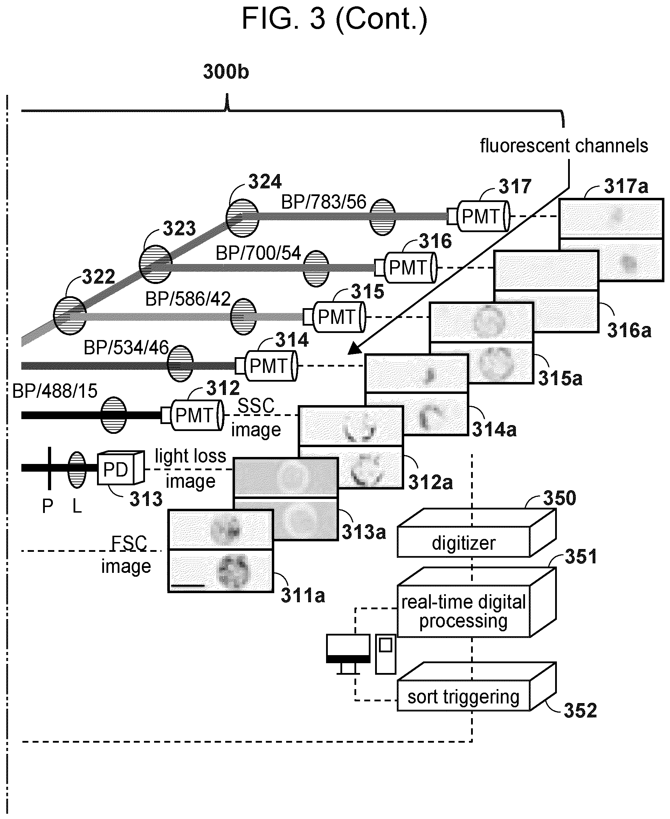

In certain embodiments, systems are a fluorescence imaging using radiofrequency tagged emission image-enabled particle sorter, such as depicted in **FIG. 3.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency $f_{1-n}$.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017. In certain embodiments, sorting component 300c includes a sort decision module having a plurality of sort decision units, such as those described in U.S. Patent Publication No. 2020/0256781.

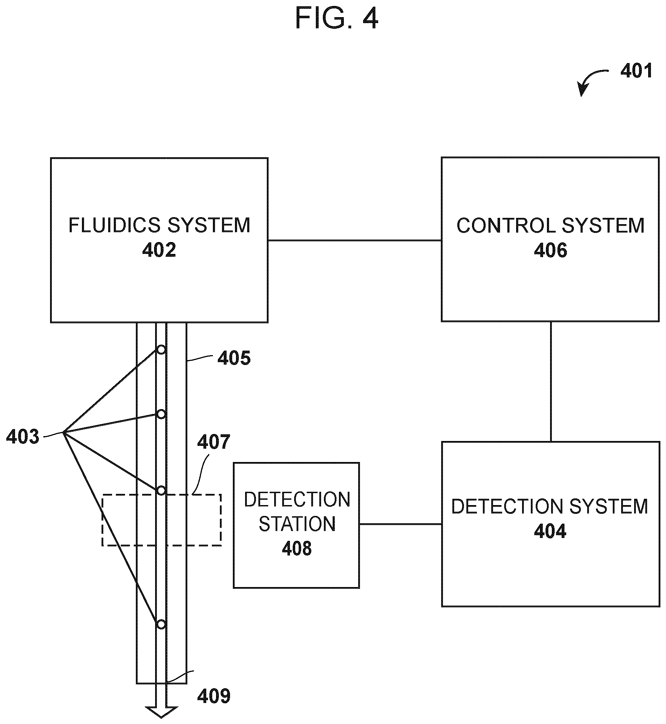

In some embodiments, systems are particle analyzers where the particle analysis system 401 **(FIG. 4)** can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

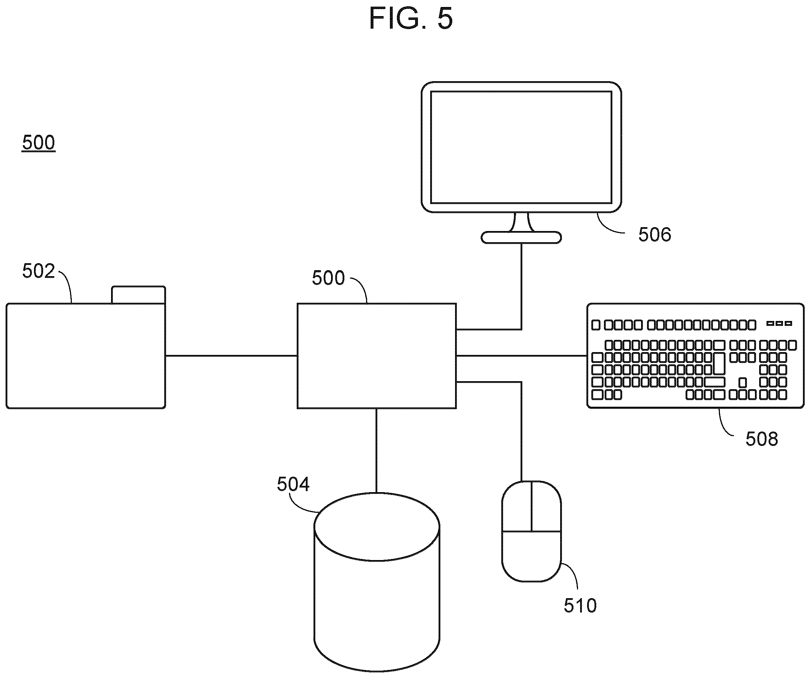

FIG. 5 shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel. Analytics controller 500 may be a processor configured to carry out methods of the invention, e.g., by applying a distance-based classification model to determine a density distinguishing threshold in a size-based analyte feature space, applying a density-based clustering algorithm to separate the analyte data into a high-density cluster and a low-density cluster based on the density threshold and classifying the analyte data based on the high-density cluster and the low density cluster based on the size-based analyte feature space.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

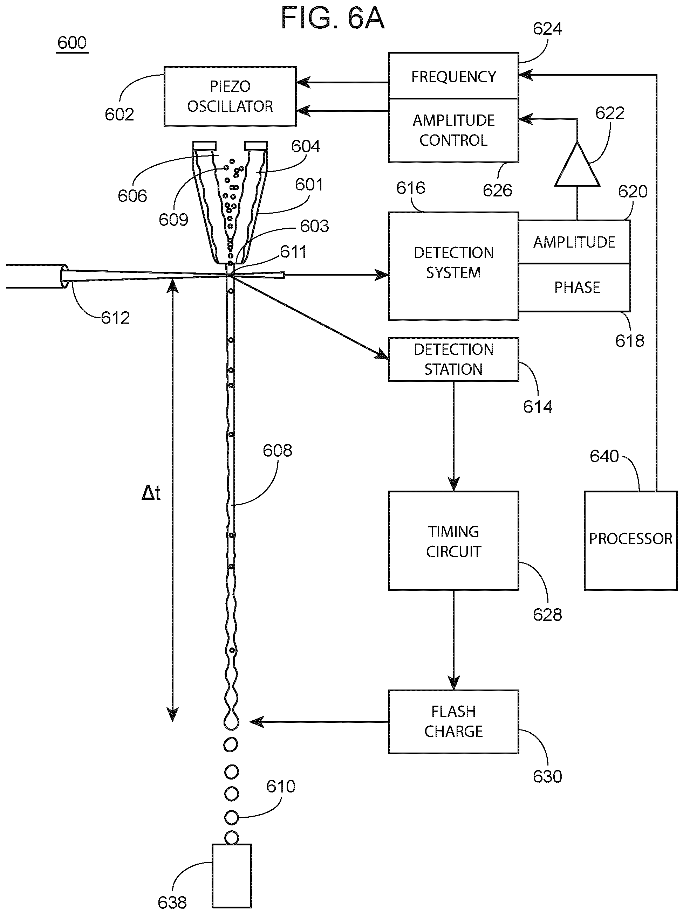

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

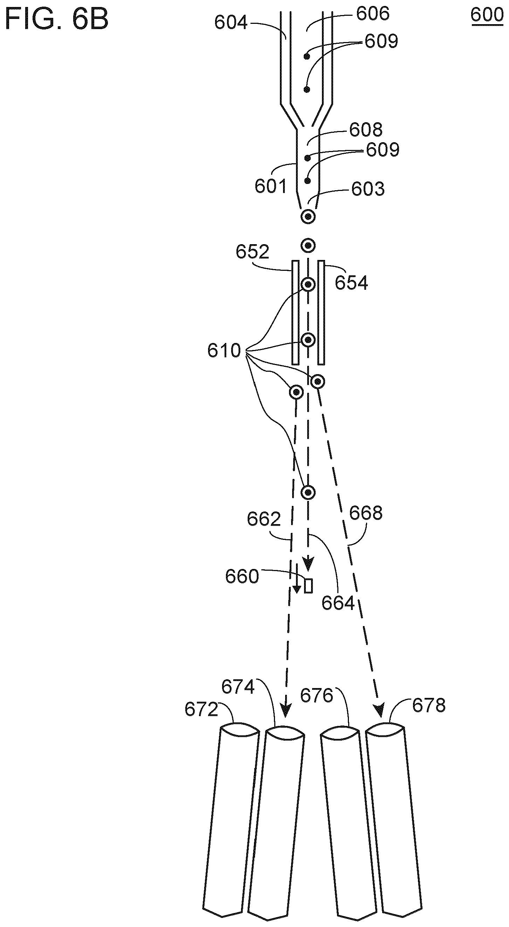

**FIG. 6B** is a schematic drawing of a particle sorter system, in accordance with one embodiment presented herein. The particle sorter system 600 shown in **FIG. 6B,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria™ line of flow cytometers commercially provided by Becton, Dickinson and Company (Franklin Lakes, NJ).

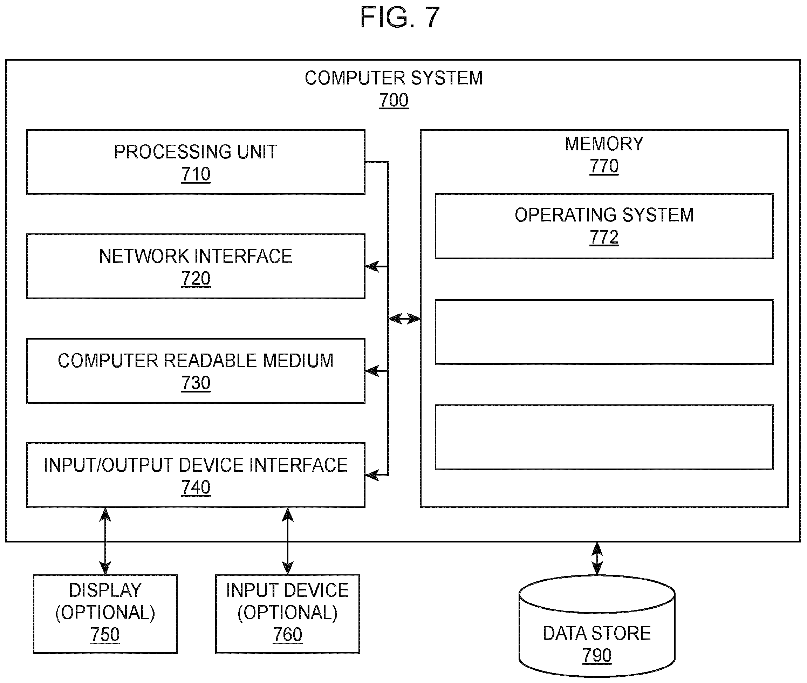

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo®) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

## NON-TRANSITORY COMPUTER-READABLE STORAGE MEDIA

Aspects of the present disclosure further include non-transitory computer readable storage media having instructions for practicing the subject methods, such as to practice one or more computer implemented methods described herein. Computer readable storage media may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as many others.

In some embodiments, the non-transitory computer readable storage medium includes algorithm for detecting light from a particle in a sample in a flow stream with a light detection system having a photodetector, algorithm for generating data signals in response to the detected light, algorithm for normalizing the data signal with a detector gain to generate gain-normalized data signals and algorithm for adjusting the gain-normalized data signals with a scaling factor to generate scaled data signals.

In some instances, the non-transitory computer readable storage medium includes algorithm to apply a scaling factor which adjusts the gain-normalized data signals to a predetermined mean fluorescence intensity. In some instances, the non-transitory computer readable storage medium includes algorithm for calculating the scaling factor. In some instances, the non-transitory computer readable storage medium includes algorithm for determining linear gain as a function of photodetector voltage, algorithm for determining the gain corresponding to the predetermined mean fluorescence intensity and algorithm for calculating the scaling factor which adjusts the generated gain-normalized data signals to the predetermined mean fluorescence intensity.

In some instances, the non-transitory computer readable storage medium includes algorithm to derive the linear gain from a look-up table. In some instances, the non-transitory computer readable storage medium includes algorithm for irradiating the photodetector with a light source at a plurality of different intensities, algorithm for detecting light from the light source at the plurality of different intensities at a plurality of different photodetector voltages and algorithm for determining detector gain settings for the photodetector sufficient to generate a mean fluorescence intensity that increases linearly with the detector gain. In some instances, the non-transitory computer readable storage medium includes algorithm for determining the predetermined mean fluorescence intensity. In some instances, the transitory computer readable storage medium includes algorithm for irradiating a reference particle (e.g., a multi-spectral bead) with a light source and algorithm for detecting fluorescence from the reference particle. In some instances, the non-transitory computer readable storage medium includes algorithm to use detector gain to normalize the data signals that is the gain of the photodetector at the predetermined mean fluorescence intensity. In some instances, the non-transitory computer readable storage medium includes algorithm for adjusting the gain-normalized data signals with a calibration factor. In some instances, the non-transitory computer readable storage medium includes algorithm for adjusting the gain-normalized data signals with a calibration factor which adjusts the gain-normalized data signals in response to changes in particle velocity in the flow stream. In some instances, the non-transitory computer readable storage medium includes algorithm for adjusting the gain-normalized data signals with a calibration factor which adjusts the gain-normalized data signals in response to changes in laser intensity of the light source. In some embodiments, the non-transitory computer readable storage medium includes algorithm for spectrally unmixing the gain-normalized data signals and algorithm for adjusting the spectrally unmixed data signals with the scaling factor to generate scaled unmixed data signals.

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

## KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In embodiments, the program storage media include instructions for analyzing flow cytometer data as in the methods and for use with the systems described herein. In embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo®).

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

## UTILITY

The subject methods, systems and computer systems find use in a variety of applications where it is desirable to calibrate or optimize a light detection system (e.g., having a plurality of photodetectors), such as in a particle analyzer. The subject methods and systems also find use for light detection systems that are used to analyze and sort particle components in a sample in a fluid medium, such as a biological sample. The present disclosure also finds use in flow cytometry where it is desirable to provide a flow cytometer with improved cell sorting accuracy, enhanced particle collection, reduced energy consumption, particle charging efficiency, more accurate particle charging and enhanced particle deflection during cell sorting. In embodiments, the present disclosure reduces the need for user input or manual adjustment during sample analysis with a flow cytometer. In certain embodiments, the subject methods and systems provide fully automated protocols so that adjustments to a flow cytometer during use require little, if any human input.

The following examples are offered by way of illustration and not by way of limitation.

## EXPERIMENTAL

[0185]

　I. Rescaling FACS Chorus Experiment data to be detector settings independent

A. Background

Flow cytometry signals are scaled on an arbitrary unit axes. The maximum pulse height is defined by the bit depth of the system e.g. $2^{16}$ for FACS Discover, and the pulse area is defined as the sum of pulse heights within an event window. The max pulse area being defined as:

$$\text{Pulse Area}_{max} = \text{bit depth} \times \text{pulse length [μs]} \times \text{sample rate [MHz]}$$

The magnitude of the pulse is related to the signal above noise at a given detector amplification. The result of this is that the pulse height/area increases as the detector amplification increases. This arbitrary unit scaling leads to ambiguity in the interpretation of underlying data due to its dependence on detector settings.

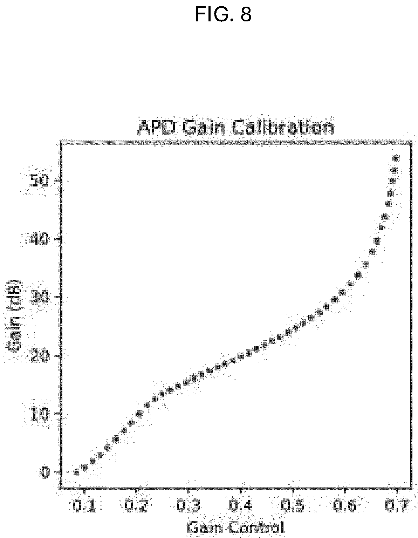

With next-generation standardization, the goal is to allow users to view their data in a Detector Setting Independent (DSI) manner. This approach is achieved by implementing a DSI scaling factor that can be transposed between detector settings by taking advantaging of the underlying linearity of detector gain with respect to signal magnitude. This is linearity is accomplished by performing a detector setting calibration during baseline setup, e.g., as illustrated in FIG. 8.

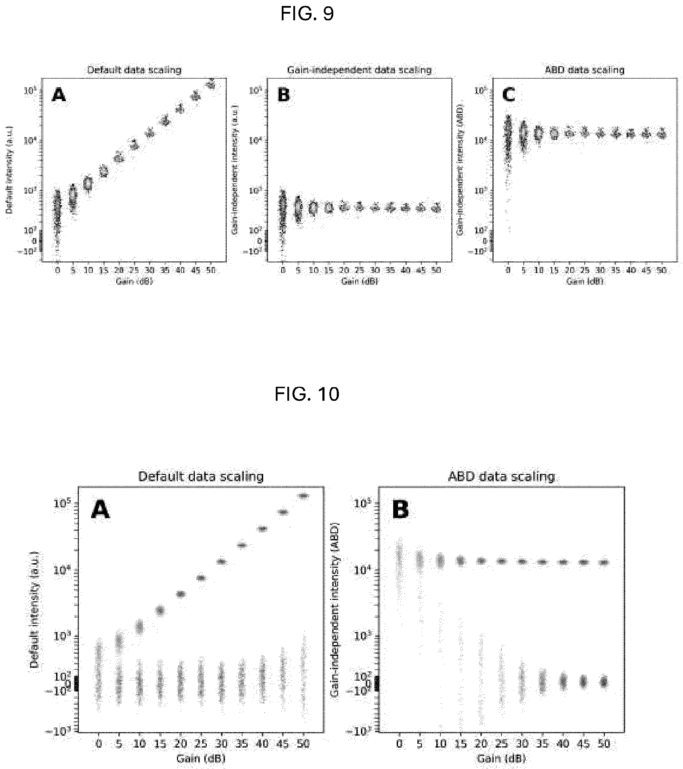

This resulting detector calibration results in a linear relationship between pulse magnitude and gain can be used to normalize data to a common scale, e.g., as shown in FIG. 9. This will allow for the comparison of data not only across experiments but also settings, with results being proportional to the underlying signal before reaching the detector.

B. Chorus Experiment

When a user opens a new Chorus Experiment, the detectors settings will be at default biological assay TTV settings. These assay settings are a set of detector settings that should work well across a broad range of assays, but are not necessarily optimal for all assays. If opening a pre-existing experiment, the detector settings will be set to the settings used when the experiment was last saved but adjusted according to daily Setup and QC to account for changes in the Multi-Spectral Beads (MSB) target value changes within a given tolerance window. This gain adjustment is achieved using the following algorithm:

$$\text{gain}_2 \,(\text{linear}) = \frac{\text{on-target MFI}_1}{\text{on-target MFI}_2} \times \frac{\text{on-target gain}_2}{\text{on-target gain}_1} \times \frac{\text{ABD}_2}{\text{ABD}_1} \times \text{gain}_1$$

$$= \frac{\text{offset}_1}{\text{offset}_2} \times \frac{\text{ABD}_2}{\text{ABD}_1} \times \text{gain}_1 \,(\text{linear})$$

$$= \frac{\text{TTV}}{\text{offset}_2} \times \text{ABD}_2$$

The Chorus Experiment does not save detector gains in their native form but instead in a table of default TTVs. TTVs are a calibration factor to convert data between arbitrary units and Assigned Becton Dickinson (ABD) units. This calibration factor can be rescaled to any given detector settings based on the gain (linear). While the Chorus Experiment does not have access to saved detector gains, Experiment (as a subsystem/process in Windows) does have access to current detector gain values.

$$\text{TTV} = \frac{\text{offset} \times \text{gain (linear)}}{\text{ABD}}$$

The gains found in the step of 'Setting Detector Gains' are called on-target gains. Median Fluorescent intensity (MFI) measured at on-target gains is called on-target MFI. They are recorded in the Setup report. The ratio of on-target MFI and on-target gain in linear unit, termed offset, is an important parameter for gain setup when users open either a new or existing experiment.

The offset provides a detector setting independent MFI for the MSBs when they are on target and are calculated during daily Setup & QC.

$$\text{offset} = \frac{\text{on-target MFI}}{\text{on-target gain (linear)}}$$

This ABD scaling factor allows for scaling data consistently across instruments and detector settings and across different MSB lots.

C. Implementing detector setting independent scaling factors

In typical flow cytometry use, the detector settings are used to ensure that a sample, e.g. MSB, is within a target window on the arbitrary unit scale. If the sample MFI is too high in a particular channel the detector settings are decreased, if it is too low the detector settings are increased. The use of TTVs facilitates this normalization over time and between instruments to increase the consistency of data. By implementing a scaling factor that accounts for the detector settings it becomes feasible to optimize detector irrespective of data scaling, with data scaling instead becoming a digital correction factor.

$$\text{data (DSI)} = \frac{\text{data (default)}}{\text{DSI Factor}}$$

There a several approaches to implementing DSI scaling each with advantages to implementation and workflow.

1. Scaling Factors

a. ABD

The use of ABD values to rescale data directly uses the current implementation of TTVs. ABD values are assigned to the MSB on every detector channel. This results in data becoming detector and instrument agnostic with its precision limited to the ABD assignment accuracy of the MSB. This accuracy is the same as the precision of day-today MFI normalization using detector gain adjustments.

$$\text{DSI Factor} = \text{TTV (current)}$$

D. Changes to Spectral Unmixing

1. The current spectral unmixing workflow roughly follows the order of:

a. Obtain NSOVs from Single Stain analysis (delta MFI, divided by TTVs used at time of acquisition)

$$\text{MFI}_{posNorm} = \frac{\text{MFI}_{pos}}{\text{TTV (current)}}$$

$$\text{MFI}_{negNorm} = \frac{\text{MFI}_{neg}}{\text{TTV (current)}}$$

$$\text{nsov}_{Norm} = \text{MFI}_{posNorm} - \text{MFI}_{negNorm}$$

b. Convert NSOVs to sov' non-normalized values by multiplying the current TTVs

$$\text{sov}' = \text{nsov}_{Norm} \times \text{TTV (current)}$$

c. Divide each fluorochrome's sov' by the max value to generate an SOV matrix spanning 0-1.

$$\text{SOV} = \frac{\text{sov}'}{\text{max(sov')}}$$

d. Use the resulting matrix to unmix the raw signal data to its individual components. Converting unmixed data to DIS scaling can occur upstream or downstream of the unmixing process as follows. For ergonomic reasons the downstream approach is preferred.

2. ABD

This is implemented by dividing the unmixed data on a per fluorophores basis by finding the TTVof the max detector signal from the sov' as follows. Let sov= [*s1, s2, ... , sn*] and TTV = [*t1, t2, ... , tn*]. Define the index of the maximum element in sov' as:

$$i^* = \arg\max_i (s_i)$$

Then the corresponding value in TTV is:

$$\text{TTV}(i^*) = t_{i^*}$$

$$\text{unmixed data (DSI)} = \frac{\text{data}_{\text{unmixed}}}{\text{TTV}_{i^*} \text{ (current)}}$$

3. Default Unmixing

SOV is calculated as follows:

$$\text{SOV} = \frac{\text{sov}'}{\text{sum(sov}')}$$

4. ABD implementation

The equation in 2 above is updated as follows:

$$\text{unmixed data (DSI)} = \text{data}_{\text{unmixed}} \times \frac{\text{sum(nsov}'_{Norm})}{\text{sum(sov}')}$$

E. Changes to data visualization

With data scaled in the default manner, typically it is possible to find biexponential scaling criteria or a sigma for arcsinh scaling that is applicable across gains for a given detector. These criteria may, however, be different between detectors, FIG 10, panel A. With the introduction of ABD-scaled data, the biexponential or sigma criteria need to be adjusted with detector gain, FIG. 10, panel B. Furthermore, the gates that are drawn on axis will ideally need to be transposed between default and DSI modes. A method of dynamic display scaling methods for the axes and gating is identified and implemented.

The biexponential scaling function is defined as:

$$S(X; W) = T\, 10^{-(M-W)}\left(10^{X-W} - p^2\, 10^{-(X-W)/p} + p^2 - 1\right), \qquad p = p(W)$$

where:

- $S$: raw linear signal intensity (photons, ADC counts ...)
- $X \in [0, M]$: bi-exponential axis value shown on the plot
- T: highest raw value that should inap to $X = M$
- $M$: positive dynamic range in decades (unit-less)
- $W$: half-width in decades of the linear zone around zero (unit-less)

$$W = \frac{M - \log_{10}(T/|r|)}{2}$$

- $p$: parameter chosen so that the slope is exactly 1 at $X = W$

$$p = \text{root of } g(p) = \frac{2p \log_{10} p}{p + 1} - W$$

1. Linear rescale of the raw data

Once the raw data is rescaled by DSI factor, the raw data's bi-exponential scaling factors are adjusted to account for the new scaling but to visually look the same.

Since $S = T\,10^{-(M-W)}$ and $10^{-(M-W)}$, $T_{ref}$ can simply be rescaled by the DSI factor. In order to correctly recalculate the half-width W we need to rescale $r$ by the DSI factor as well to keep its ratio with T the same and thus keeping W fixed. The new scaling factors are:

$$T_{\text{DSI}} = \frac{T_{\text{ref}}}{\text{DSI factor}}, \qquad r_{\text{DSI}} = \frac{r_{\text{ref}}}{\text{DSI factor}}, \qquad M_{\text{DSI}} = M_{\text{ref}}$$

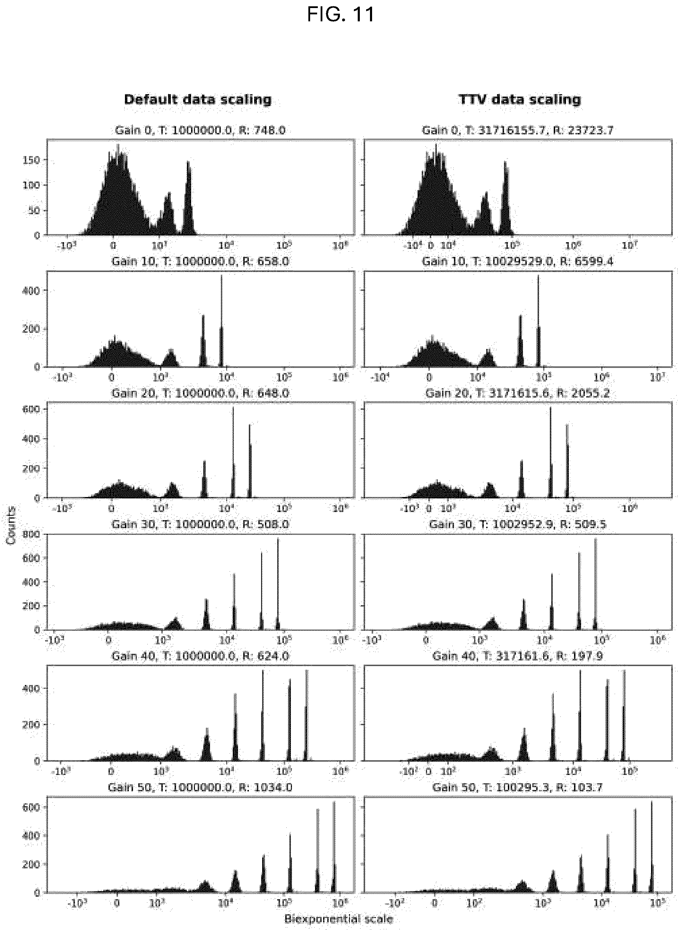

An example of this implementation is provided in FIG. 11.

Notwithstanding the appended claims, the disclosure is also defined by the following clauses:

1. A method comprising:

detecting light from a particle in a sample in a flow stream with a light detection system comprising a photodetector;
generating data signals in response to the detected light;
normalizing the data signal with a detector gain to generate gain-normalized data signals; and
adjusting the gain-normalized data signals with a scaling factor to generate scaled data signals.

2. The method according to clause 1, wherein the scaling factor adjusts the gain-normalized data signals to a predetermined mean fluorescence intensity (MFI).

3. The method according to any one of clauses 1-2, wherein the method comprises calculating the scaling factor.

4. The method according to clause 3, wherein the scaling factor is calculated by:

determining linear gain as a function of photodetector voltage;
determining the gain corresponding to the predetermined mean fluorescence intensity; and
calculating the scaling factor which adjusts the generated gain-normalized data signals to the predetermined mean fluorescence intensity.

5. The method according to clause 4, wherein the linear gain is derived from a lookup table.

6. The method according to any one of clauses 4-5, wherein the method comprises determining the linear gain as a function of photodetector voltage by:

irradiating the photodetector with a light source at a plurality of different intensities; and
detecting light from the light source at the plurality of different intensities at a plurality of different photodetector voltages; and

determining detector gain settings for the photodetector sufficient to generate a mean fluorescence intensity that increases linearly with the detector gain.

7. The method according to clause 6, wherein the light source comprises a light emitting diode (LED).

8. The method according to any one of clauses 2-7, wherein the predetermined mean fluorescence intensity is determined by:

irradiating a reference particle with a light source; and
detecting fluorescence from the reference particle.

9. The method according to clause 8, wherein the reference particle comprises a multi-spectral fluorescence bead.

10. The method according to any one of clauses 1-9, wherein the detector gain used to normalize the data signals is the gain of the photodetector at the predetermined mean fluorescence intensity.

11. The method according to any one of clauses 1-10, wherein the method further comprises adjusting the gain-normalized data signals with a calibration factor.

12. The method according to clause 11, wherein the calibration factor adjusts the gain-normalized data signals in response to changes in particle velocity in the flow stream.

13. The method according to clause 11, wherein the calibration factor adjusts the gain-normalized data signals in response to changes in laser intensity of the light source.

14. The method according to any one of clauses 1-13, wherein the method comprises:

spectrally unmixing the gain-normalized data signals; and

adjusting the spectrally unmixed data signals with the scaling factor to generate scaled unmixed data signals.

15. The method according to any one of clauses 1-14, wherein light is detected in a plurality of photodetector channels.

16. The method according to any one of clauses 1-15, further comprising irradiating the sample with a light source.

17. The method according to clause 16, wherein the light source comprises a laser.

18. The method according to clause 17, wherein the light source comprises a plurality of lasers.

19. The method according to any one of clauses 1-18, wherein the light detection system comprises a plurality of photodetectors.

20. The method according to clause 19, wherein the photodetectors comprise one or more photomultiplier tubes.

21. The method according to any one of clauses 1-20, wherein the light detection system comprises a photodetector array.

22. The method according to clause 21, wherein the photodetector array comprises photodiodes.

23. The method according to clause 22, wherein the photodetector array comprises charge coupled devices.

24. A system comprising:

a light source configured to irradiate a sample comprising a particle in a flow stream;

a light detection system comprising a photodetector for detecting light from the irradiated particle; and

a processor comprising memory operably coupled to the processor wherein the memory comprises instructions stored thereon, which when executed by the processor, cause the processor to:

generate data signals in response to the detected light;

normalize the data signal with a detector gain to generate gain-normalized data signals; and

adjust the gain-normalized data signals with a scaling factor to generate scaled data signals.

25. The system according to clause 24, wherein the system is configured to detect light by the light detection system in a plurality of photodetector channels.

26. The system according to any one of clauses 24-25, wherein the memory comprises instructions to apply a scaling factor which adjusts the gain-normalized data signals to a predetermined mean fluorescence intensity (MFI).

27. The system according to any one of clauses 24-26, wherein the memory comprises instructions for calculating the scaling factor.

28. The system according to clause 27, wherein the memory comprises instructions for calculating the scaling factor by:

determining linear gain as a function of photodetector voltage;

determining the gain corresponding to the predetermined mean fluorescence intensity; and

calculating the scaling factor which adjusts the generated gain-normalized data signals to the predetermined mean fluorescence intensity.

29. The system according to clause 28, wherein the memory comprises instructions to derive the linear gain from a look-up table.

30. The system according to any one of clauses 28-29, wherein the memory comprises instructions for determining the linear gain as a function of photodetector voltage by:

irradiating the photodetector with a light source at a plurality of different intensities; and

detecting light from the light source at the plurality of different intensities at a plurality of different photodetector voltages; and

determining detector gain settings for the photodetector sufficient to generate a mean fluorescence intensity that increases linearly with the detector gain.

31. The system according to clause 30, wherein the light source comprises a light emitting diode.

32. The system according to any one of clauses 25-31, wherein the memory comprises instructions for determining the predetermined mean fluorescence intensity by:

irradiating a reference particle with a light source; and

detecting fluorescence from the reference particle.

33. The system according to clause 32, wherein the reference particle comprises a multi-spectral bead.

34. The system according to any one of clauses 24-33, wherein the detector gain used to normalize the data signals is the gain of the photodetector at the predetermined mean fluorescence intensity.

35. The system according to any one of clauses 24-34, wherein the memory comprises instructions for adjusting the gain-normalized data signals with a calibration factor.

36. The system according to clause 35, wherein the calibration factor adjusts the gain-normalized data signals in response to changes in particle velocity in the flow stream.

37. The system according to clause 35, wherein the calibration factor adjusts the gain-normalized data signals in response to changes in laser intensity of the light source.

38. The system according to any one of clauses 24-37, wherein the memory comprises instructions for:

spectrally unmixing the gain-normalized data signals; and
adjusting the spectrally unmixed data signals with the scaling factor to generate scaled unmixed data signals.

39. The system according to any one of clauses 24-38, wherein the light source comprises a laser.

40. The system according to clause 39, wherein the light source comprises a plurality of lasers.

41. The system according to any one of clauses 24-40, wherein the light detection system comprises a plurality of photodetectors.

42. The system according to clause 41, wherein the photodetectors comprise one or more photomultiplier tubes.

43. The system according to any one of clauses 24-40, wherein the light detection system comprises a photodetector array.

44. The system according to clause 43, wherein the photodetector array comprises photodiodes.

45. The system according to clause 44, wherein the photodetector array comprises charged coupled devices.

46. A non-transitory computer readable storage medium comprising instructions stored thereon wherein the non-transitory computer readable storage medium comprises:

algorithm for detecting light from a particle in a sample in a flow stream with a light detection system comprising a photodetector;
algorithm for generating data signals in response to the detected light;
algorithm for normalizing the data signal with a detector gain to generate gain-normalized data signals; and
algorithm for adjusting the gain-normalized data signals with a scaling factor to generate scaled data signals.

47. The non-transitory computer readable storage medium according to clause 46, wherein the non-transitory computer readable storage medium comprises algorithm to apply a scaling factor which adjusts the gain-normalized data signals to a predetermined mean fluorescence intensity (MFI).

48. The non-transitory computer readable storage medium according to any one of clauses 46-47, wherein the non-transitory computer readable storage medium comprises algorithm for calculating the scaling factor.

49. The non-transitory computer readable storage medium according to clause 48, wherein the non-transitory computer readable storage medium comprises:

algorithm for determining linear gain as a function of photodetector voltage;
algorithm for determining the gain corresponding to the predetermined mean fluorescence intensity; and
algorithm for calculating the scaling factor which adjusts the generated gain-normalized data signals to the predetermined mean fluorescence intensity.

50. The non-transitory computer readable storage medium according to clause 49, wherein the non-transitory computer readable storage medium comprises algorithm to derive the linear gain from a look-up table.

51. The non-transitory computer readable storage medium according to any one of clauses 49-50, wherein the non-transitory computer readable storage medium comprises:

algorithm for irradiating the photodetector with a light source at a plurality of different intensities; and
algorithm for detecting light from the light source at the plurality of different intensities at a plurality of different photodetector voltages; and

algorithm for determining detector gain settings for the photodetector sufficient to generate a mean fluorescence intensity that increases linearly with the detector gain.

52. The non-transitory computer readable storage medium according to clause 51, wherein the light source comprises a light emitting diode (LED).

53. The non-transitory computer readable storage medium according to any one of clauses 47-52, wherein the non-transitory computer readable storage medium comprises algorithm for determining the predetermined mean fluorescence intensity, comprising:

algorithm for irradiating a reference particle with a light source; and
algorithm for detecting fluorescence from the reference particle.

54. The non-transitory computer readable storage medium according to clause 53, wherein the reference particle comprises a multi-spectral fluorescence bead.

55. The non-transitory computer readable storage medium according to any one of clauses 46-54, wherein the non-transitory computer readable storage medium comprises algorithm to use detector gain to normalize the data signals that is the gain of the photodetector at the predetermined mean fluorescence intensity.

56. The non-transitory computer readable storage medium according to any one of clauses 46-55, wherein the non-transitory computer readable storage medium comprises algorithm for adjusting the gain-normalized data signals with a calibration factor.

57. The non-transitory computer readable storage medium according to clause 56, wherein the calibration factor adjusts the gain-normalized data signals in response to changes in particle velocity in the flow stream.

58. The non-transitory computer readable storage medium according to clause 56, wherein the calibration factor adjusts the gain-normalized data signals in response to changes in laser intensity of the light source.

59. The non-transitory computer readable storage medium according to any one of clauses 46-58, wherein the non-transitory computer readable storage medium comprises:
algorithm for spectrally unmixing the gain-normalized data signals; and
algorithm for adjusting the spectrally unmixed data signals with the scaling factor to generate scaled unmixed data signals.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the disclosure to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope of present disclosure is embodied by the appended claims.

**Claims**

1. A method comprising:

detecting light from a particle in a sample in a flow stream with a light detection system comprising a photodetector;
generating data signals in response to the detected light;
normalizing the data signal with a detector gain to generate gain-normalized data signals; and
adjusting the gain-normalized data signals with a scaling factor to generate scaled data signals.

2. The method according to claim 1, wherein the scaling factor adjusts the gain-normalized data signals to a predetermined mean fluorescence intensity (MFI).

3. The method according to any one of claims 1-2, wherein the method comprises calculating the scaling factor.

4. The method according to claim 3, wherein the scaling factor is calculated by:

    determining linear gain as a function of photodetector voltage;
    determining the gain corresponding to the predetermined mean fluorescence intensity; and
    calculating the scaling factor which adjusts the generated gain-normalized data signals to the predetermined mean fluorescence intensity.

5. The method according to claim 4, wherein the linear gain is derived from a lookup table.

6. The method according to any one of claims 4-5, wherein the method comprises determining the linear gain as a function of photodetector voltage by:

    irradiating the photodetector with a light source at a plurality of different intensities; and
    detecting light from the light source at the plurality of different intensities at a plurality of different photodetector voltages; and
    determining detector gain settings for the photodetector sufficient to generate a mean fluorescence intensity that increases linearly with the detector gain.

7. The method according to any one of claims 2-6, wherein the predetermined mean fluorescence intensity is determined by:

    irradiating a reference particle with a light source; and
    detecting fluorescence from the reference particle.

8. The method according to any one of claims 1-7, wherein the detector gain used to normalize the data signals is the gain of the photodetector at the predetermined mean fluorescence intensity.

9. The method according to any one of claims 1-8, wherein the method further comprises adjusting the gain-normalized data signals with a calibration factor.

10. The method according to any one of claims 1-9, wherein the method comprises:

    spectrally unmixing the gain-normalized data signals; and
    adjusting the spectrally unmixed data signals with the scaling factor to generate scaled unmixed data signals.

11. The method according to any one of claims 1-10, wherein light is detected in a plurality of photodetector channels.

12. The method according to any one of claims 1-11, further comprising irradiating the sample with a light source.

13. The method according to claim 1-12, wherein the photodetectors comprise one or more photomultiplier tubes.

14. A system comprising:

    a light source configured to irradiate a sample comprising a particle in a flow stream;
    a light detection system comprising a photodetector for detecting light from the irradiated particle;
    a light detection system comprising a photodetector array; and
    a processor comprising memory operably coupled to the processor wherein the memory comprises instructions stored thereon, which when executed by the processor, cause the processor to:

        generate data signals in response to the detected light;
        normalize the data signal with a detector gain to generate gain-normalized data signals; and
        adjust the gain-normalized data signals with a scaling factor to generate scaled data signals.

15. A non-transitory computer readable storage medium comprising instructions stored thereon wherein the non-transitory computer readable storage medium comprises:

    algorithm for detecting light from a particle in a sample in a flow stream with a light detection system comprising a photodetector;

algorithm for generating data signals in response to the detected light;
algorithm for normalizing the data signal with a detector gain to generate gain-normalized data signals; and
algorithm for adjusting the gain-normalized data signals with a scaling factor to generate scaled data signals.
algorithm for calculating the scaling factor which adjusts the generated gain-normalized data signals to the predetermined mean fluorescence intensity.

| | |
|---|---|
| Detecting light from a particle of a sample in a flow stream with a light detection system having a photodetector | 101 |

Generate data signals in response to the measured light — 102

Normalizing the data signal with a detector gain to generate gain-normalized data signals — 103

Adjusting the gain-normalized data signals with a scaling factor to generate scaled data signals — 104

FIG. 1A

FIG. 1B

FIG. 1C

**Detector calibration**

Controlled light source

Gain calibration

Noise quantification

Gain normalization factors

**QC**

Target light source

Detector gain adjustment

Resolution consistency

Gain normalization factors

Fluor calibration factors (optional)

**User**

User settings

Adjusted for consistent resolution

User data

SpectralFX Parameters

Unmixed data

Calibrated unmixed data

FIG. 1D

FIG. 1E

Without gain scaling                                    With gain scaling

FIG. 1F

# FIG. 2

EP 4 671 731 A1

# FIG. 3

# FIG. 3 (Cont.)

# FIG. 4

401

FLUIDICS SYSTEM
**402**

CONTROL SYSTEM
**406**

405

403

407

DETECTION
STATION
**408**

DETECTION SYSTEM
**404**

409

# FIG. 5

500

# FIG. 6A

FIG. 6B

# FIG. 7

COMPUTER SYSTEM
700

PROCESSING UNIT
710

NETWORK INTERFACE
720

COMPUTER READABLE MEDIUM
730

INPUT/OUTPUT DEVICE INTERFACE
740

MEMORY
770

OPERATING SYSTEM
772

DISPLAY
(OPTIONAL)
750

INPUT DEVICE
(OPTIONAL)
760

DATA STORE
790

EP 4 671 731 A1

FIG. 8

APD Gain Calibration

FIG. 9

FIG. 10

FIG. 11

Europäisches
Patentamt

European
Patent Office

Office européen
des brevets

## EUROPEAN SEARCH REPORT

**Application Number**

EP 25 18 4945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/078703 A1 (POTTS STEVEN [US] ET AL) 24 April 2003 (2003-04-24) * paragraph [0026] - paragraph [0028] * ----- | 1-15 | INV. G01N15/10 G01N15/14 G01N15/1429 |
| X | EP 1 431 745 B1 (BECTON DICKINSON CO [US]) 19 April 2006 (2006-04-19) * paragraphs [0016], [0080] * ----- | 1-15 | |
| A | US 2006/015291 A1 (PARKS DAVID R [US] ET AL) 19 January 2006 (2006-01-19) * paragraph [0020] - paragraph [0023] * ----- | 1-15 | |
| A | WO 2012/030740 A2 (ACCURI CYTOMETERS INC [US]; RICH COLLIN A [US] ET AL.) 8 March 2012 (2012-03-08) * figure 3 * * paragraph [0012] - paragraph [0018] * ----- | 1-15 | |
| A | US 2024/094107 A1 (HARA MASAAKI [JP] ET AL) 21 March 2024 (2024-03-21) * paragraph [0109] - paragraph [0111] * * paragraph [0138] - paragraph [0139] * ----- | 1-15 | TECHNICAL FIELDS SEARCHED (IPC) G01N |

The present search report has been drawn up for all claims

| Place of search | Date of completion of the search | Examiner |
|---|---|---|
| The Hague | 27 October 2025 | Rasmusson, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 4945

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2025

| Patent document cited in search report | | | Publication date | Patent family member(s) | | Publication date |
|---|---|---|---|---|---|---|
| US 2003078703 | A1 | | 24-04-2003 | NONE | | |
| EP 1431745 | B1 | | 19-04-2006 | AT | E323884 T1 | 15-05-2006 |
| | | | | DE | 60304665 T2 | 15-02-2007 |
| | | | | EP | 1431745 A1 | 23-06-2004 |
| | | | | JP | 4580166 B2 | 10-11-2010 |
| | | | | JP | 2004205508 A | 22-07-2004 |
| | | | | US | 2004119974 A1 | 24-06-2004 |
| US 2006015291 | A1 | | 19-01-2006 | NONE | | |
| WO 2012030740 | A2 | | 08-03-2012 | NONE | | |
| US 2024094107 | A1 | | 21-03-2024 | CN | 112368565 A | 12-02-2021 |
| | | | | US | 2021318224 A1 | 14-10-2021 |
| | | | | US | 2024094107 A1 | 21-03-2024 |
| | | | | WO | 2020017183 A1 | 23-01-2020 |

EPO FORM P0459

For more details about this annex : see Official Journal of the European Patent Office, No. 12/82

## REFERENCES CITED IN THE DESCRIPTION

### Patent documents cited in the description

- US 63663613
- US 9423353 B
- US 9784661 B
- US 9983132 B
- US 10006852 B
- US 10078045 B
- US 10036699 B
- US 10222316 B
- US 10288546 B
- US 10324019 B
- US 10408758 B
- US 10451538 B
- US 10620111 B
- US 20170133857 A
- US 20170328826 A
- US 20170350803 A
- US 20180275042 A
- US 20190376895 A
- US 20190376894 A
- US 6350619 B
- US 7738094 B
- US 8248597 B
- US 11009400 B
- US 53710323
- US 63622370
- US 20220341838
- US 10663476 B
- US 10613017 B
- US 10605713 B
- US 10585031 B
- US 10578542 B
- US 10578469 B
- US 10481074 B
- US 10302545 B

- US 10145793 B
- US 10113967 B
- US 9952076 B
- US 9933341 B
- US 9726527 B
- US 9453789 B
- US 9200334 B
- US 9097640 B
- US 9095494 B
- US 9092034 B
- US 8975595 B
- US 8753573 B
- US 8233146 B
- US 8140300 B
- US 7544326 B
- US 7201875 B
- US 7129505 B
- US 6821740 B
- US 6813017 B
- US 6809804 B
- US 6372506 B
- US 5700692 A
- US 5643796 A
- US 5627040 A
- US 5620842 A
- US 5602039 A
- US 4987086 A
- US 4498766 A
- US 63431803
- US 63465057
- US 20170299493 A
- US 20200256781 A
- US 20210404943 A
- US 7679039 B

### Non-patent literature cited in the description

- **DIEBOLD et al.** *Nature Photonics*, 2013, vol. 7 (10), 806-810
- Flow Cytometry: A Practical Approach. Oxford Univ. Press, 1997
- Flow Cytometry Protocols. Methods in Molecular Biology. Humana Press, 1997
- Practical Flow Cytometry. Wiley-Liss, 1995
- **VIRGO et al.** *Ann Clin Biochem.*, January 2012, vol. 49 (1), 17-28

- **LINDEN.** *Semin Throm Hemost.*, October 2004, vol. 30 (5), 502-11
- **ALISON et al.** *J Pathol*, December 2010, vol. 222 (4), 335-344
- **HERBIG et al.** *Crit Rev Ther Drug Carrier Syst.*, 2007, vol. 24 (3), 203-255
- **SCHRAIVOGEL et al.** High-speed fluorescence image-enabled cell sorting. *Science*, 2022, vol. 375 (6578), 315-320